(19) **Europäisches Patentamt European Patent Office Office européen des brevets**

(11) **EP 3 859 381 B1**

(12) **EUROPEAN PATENT SPECIFICATION**

(45) Date of publication and mention
of the grant of the patent:
**04.06.2025 Bulletin 2025/23**

(21) Application number: **21153440.9**

(22) Date of filing: **26.01.2021**

(51) International Patent Classification (IPC):
*G01S 7/527* (2006.01)    *G01S 7/56* (2006.01)
*G01S 15/89* (2006.01)

(52) Cooperative Patent Classification (CPC):
**G01S 15/8902; G01S 7/527; G01S 7/56**

(54) **UNDERWATER DETECTION DEVICE AND UNDERWATER DETECTION IMAGE GENERATION METHOD**

UNTERWASSERDETEKTIONSVORRICHTUNG UND VERFAHREN ZUR ERZEUGUNG EINES UNTERWASSERDETEKTIONSBILDES

DISPOSITIF DE DÉTECTION SOUS-MARINE ET PROCÉDÉ DE GÉNÉRATION D'IMAGE DE DÉTECTION SOUS-MARINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2020 JP 2020012836**
**17.07.2020 JP 2020122862**

(43) Date of publication of application:
**04.08.2021 Bulletin 2021/31**

(73) Proprietor: **Furuno Electric Co., Ltd.**
**Hyogo 662-8580 (JP)**

(72) Inventor: **YAMAZAKI, Yuki**
**Nishinomiya, Hyogo 662-8580 (JP)**

(74) Representative: **Cleveland Scott York**
**5 Norwich Street**
**London EC4A 1DR (GB)**

(56) References cited:
**EP-A2- 3 273 264      GB-A- 2 573 759**
**JP-A- S60 143 795**

**Description**

The present invention relates to an underwater detection device for transmitting an ultrasonic wave in water and detecting a state in water based on the reflected wave, and an underwater detection image generation method based on a signal intensity of the reflected wave.

Conventionally, an underwater detection device is known which transmits ultrasonic waves into water and detects a state of the underwater based on the reflected waves. In this type of device, for example, a transmission transducer and a reception transducer for transmitting and receiving ultrasonic waves are installed at the bottom of the ship, and the signal intensity (volume data) of the reflected waves is acquired for a three-dimensional detection range. Then, based on the acquired volume data, a surface image (three-dimensional image) of the signal intensity is generated, and the generated surface image is displayed on a monitor or the like as a detection image of the detection range. By referring to the displayed detection image, the user can grasp the state of a target object such as a fish school or a submerged ship existing in the water.

Here, the volume data can be acquired by various methods. For example, volume data is acquired by transmitting a flat fan-shaped transmission beam directly beneath the ship bottom to obtain echo data indicating the intensity of the reflected wave and integrating the acquired echo data in time series. In this configuration, the underwater state can be displayed three-dimensionally by using the volume data accumulated in a predetermined period of time. In this three-dimensional display, the volume data approaching each other can be clustered, and the largest cluster can be determined as the bottom and displayed.

US 2016/0259052 A1 (Patent Document 1) describes an underwater detection device of this type. GB 2 573 759 A discloses an underwater detection apparatus which sets a boundary, the boundary passing through a point having a depth substantially equal to the water bottom depth and making an oblique angle with a horizontal plane. Echoes above and below the boundary are displayed in different colors.

In the underwater detection device as described above, the transmission beam is incident obliquely with respect to the bottom. Therefore, the distribution range of the echo data of the reflected wave from the bottom becomes wider toward the end of the arc of the transmission beam due to the influence of the beam width of the transmission beam. As a result, the three-dimensional image of the bottom is displayed with both ends lifted in a V-shape than the position of the actual bottom.

When the signal intensity of the bottom and the signal intensity of the fish school or the like are approximate to each other, colors having intensity levels approximate to each other are added to the bottom and the fish school or the like. Therefore, in the display image, the fish school or the like is assimilated to the bottom, and the stereoscopic visibility of the fish school or the like is deteriorated.

In view of the above problems, it is an object of the present invention to provide an underwater detection device and an underwater detection image generation method, which can properly display the bottom and can visually recognize the states of the bottom and the target object.

According to one aspect of the present invention there is provided an underwater detection device as defined in claim 1.

According to another aspect of the invention there is provided an underwater detection image generation method as defined in claim 8.

Preferred features of the invention are recited in the dependent claims.

According to the underwater detection device of the present embodiment, the bottom can be displayed at an appropriate position corresponding to the actual bottom position. In addition, since the bottom and the target are displayed in different display modes, the states of the bottom and the target can be visually recognized well.

In the underwater detection device according to the present embodiment, the image generating module may be configured to display the detection image in a color corresponding to the signal intensity, and display the bottom image in a color different from the detection image.

According to this configuration, the user can clearly distinguish the bottom from the target object such as the fish school by the difference in color. Therefore, the states of the bottom and the target can be visually recognized well.

The underwater detection device may include an input module that accepts a coefficient, and the edge calculation module may be configured to calculate the edge position by multiplying the coefficient by the correction value.

According to this configuration, the user can arbitrarily change the edge position by adjusting the coefficient. Therefore, the user can smoothly confirm the fish school or the like, attached to the vicinity of the bottom by adjusting the coefficient, for example.

In the underwater detection device according to the present embodiment, the edge calculation module may be configured to detect a distance position where the signal intensity is equal to or less than a threshold value from the bottom position toward the transmission position, and set the edge position based on the distance position.

In this configuration, the underwater detection device includes an input module that accepts the threshold value, and the edge calculation module may be configured to detect a distance position based on the threshold value.

According to this configuration, the user can arbitrarily change the edge position by adjusting the threshold value. Therefore, the user can smoothly confirm the fish school or the like attached to the vicinity of the bottom by adjusting the threshold value, for example.

In the underwater detection device according to the present embodiment, the image generation module may be configured to generate the detection image and the bottom image viewed from a predetermined viewpoint based on the correction data and the bottom position in a three-dimensional detection range.

According to this configuration, the user can stereoscopically confirm the bottom and the target from a predetermined viewpoint.

As described above, according to the present invention, it is possible to provide an underwater detection device and an underwater detection image generation method, which can properly display the bottom and can visually recognize the states of the bottom and the target.

The effect or significance of the present invention will be further apparent from the description of the embodiments shown below. However, the embodiments shown below are merely one illustration in practicing the present invention, and the present invention is not limited in any way to those described in the following embodiments.

FIG. 1 is a diagram showing a use mode of an underwater detection device according to the embodiment;
FIG. 2 is a block diagram showing a configuration of the underwater detection device according to the embodiment;
FIG. 3 is a flowchart illustrating a process for generating an image in water according to the embodiment;
FIG. 4 is a flowchart showing a bottom detection process according to the embodiment;
FIG. 5 is a time chart showing a reception signal in a predetermined orientation, and a state of a differential signal obtained by differentiating the reception signal according to the embodiment;
FIG. 6 is a diagram showing various parameters used in the edge calculation process according to the embodiment;
FIG. 7 is a diagram schematically illustrating a state in which the bottom position and the edge position are acquired for each orientation according to the embodiment;
FIG. 8 is a diagram schematically showing a state in which an x-y coordinate system is applied in the coordinate transformation process according to the embodiment;
FIG. 9 is a diagram showing interpolation process of the bottom position and the edge position in the coordinate transformation process according to the embodiment;
FIG. 10 is a flowchart showing correction process according to the embodiment;
FIG. 11A is a diagram schematically showing a state in which echo data is acquired according to the embodiment;
FIG. 11B is a diagram schematically showing a state in which the bottom detection process according to the embodiment is executed;
FIG. 11C is a diagram schematically showing a state in which the edge calculation process according to the embodiment is executed;
FIG. 11D is a diagram schematically showing a state in which the correction process is executed according to the embodiment;
FIG. 12 is a flowchart showing image generation process according to the embodiment;
FIG. 13A is a diagram showing a display example of an image according to a comparative example;
FIG. 13B is a diagram showing a display example of an image according to the embodiment;
FIG. 14 is a diagram showing a display example of another image according to the embodiment;
FIG. 15A is a diagram showing a configuration of an operation item according to the first modification;
FIG. 15B is a diagram showing a display example of an image when the coefficient is set to 0;
FIG. 16 is a flowchart showing a bottom detection process according to the second modification;
FIG. 17 is a time chart showing a reception signal in a predetermined orientation, and a state of a differential signal obtained by differentiating the reception signal according to the second modification;
FIG. 18 is a flowchart showing a part of the bottom detection process according to the third modification;
FIG. 19 is a flowchart showing a part of the bottom detection process according to the third modification;
FIG. 20 is a flowchart showing edge calculation process according to fourth modification; and
FIG. 21A, FIG. 21B, FIG. 21C, and FIG. 21D are diagrams schematically showing an example of an edge calculation process according to fourth modification, respectively.

Embodiments of the present invention will be described below with reference to the drawings. The following embodiment shows an example in which the present invention is applied to an underwater detection device installed in a hull of a fishing vessel or the like. However, the following embodiment is one of embodiment of the present invention, and the present invention is not limited to the following embodiment.

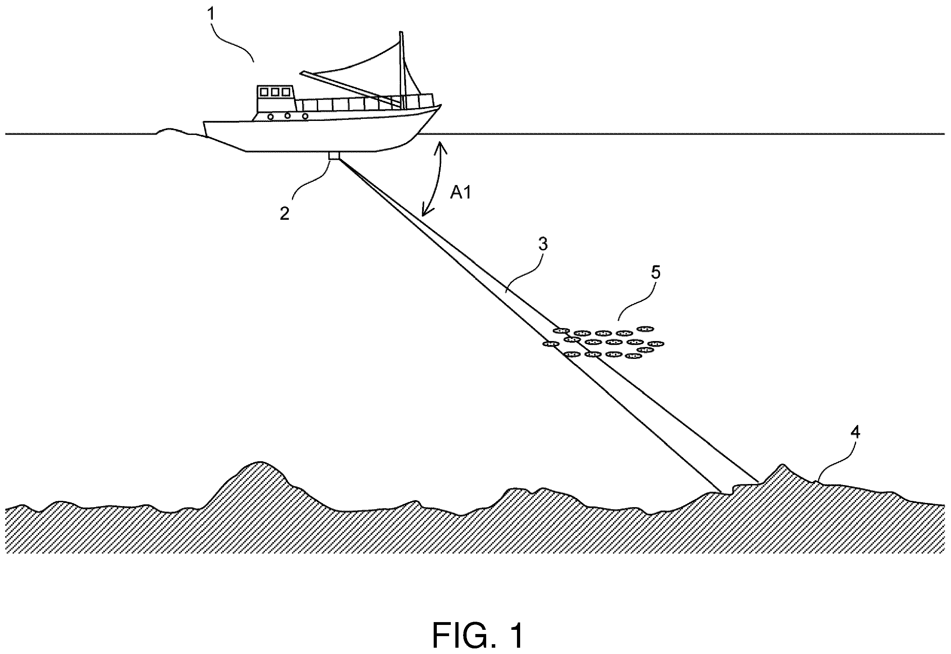

FIG. 1 is a diagram showing a use mode of the underwater detection device.

As shown in FIG. 1, in the present embodiment, the transducer module 2 is installed at the bottom of the ship 1, and ultrasonic waves are transmitted from the transducer module 2 into the water. The echo of the transmitted ultrasonic wave is received by the transducer module 2, thereby generating a detection image in water. In the present embodiment, in the shape of a fan-shaped, the transmission beam 3 of the ultrasonic wave is transmitted in pulses. The center angle of the fan shape is, for example, about 180°. In FIG. 1, the transmission beam 3 is fan-shaped in a direction perpendicular to the paper surface. In FIG. 1, the thickness of the transmission beam 3 is shown.

The direction of the transducer module 2 may be changed in the horizontal direction and the vertical direction by the operation on the control unit installed in the wheelhouse or the like of the ship 1. By changing the orientation of the transducer module 2 in the vertical direction, the tilt A1 of the transmission beam 3 can be changed in the range of 0 to 90°. Further, by changing the direction of the transducer module 2 in the horizontal direction, the center orientation of the transmission beam 3 can be changed in the range of 360°. The underwater detection image generated based on the reflected wave (echo) is displayed on a display installed in the wheelhouse of a ship, etc. Thus, the user can confirm the state of the bottom 4, the position of the fish school 5, and the like in a desired direction.

In the present embodiment, with the progress of the ship 1, the history of the reception signal of the reflected wave is accumulated. Thus, the volume data in which the signal intensity of the reception signal is distributed in the three-dimensional detection range is generated. Based on the volume data, a detection image and a bottom image showing the distribution of signal intensity when the detection range is viewed from a predetermined viewpoint direction are displayed. The detection image includes the intensity distribution of the target object such as the fish school 5. As a result, the user can three-dimensionally confirm the state of the target object existing in the water.

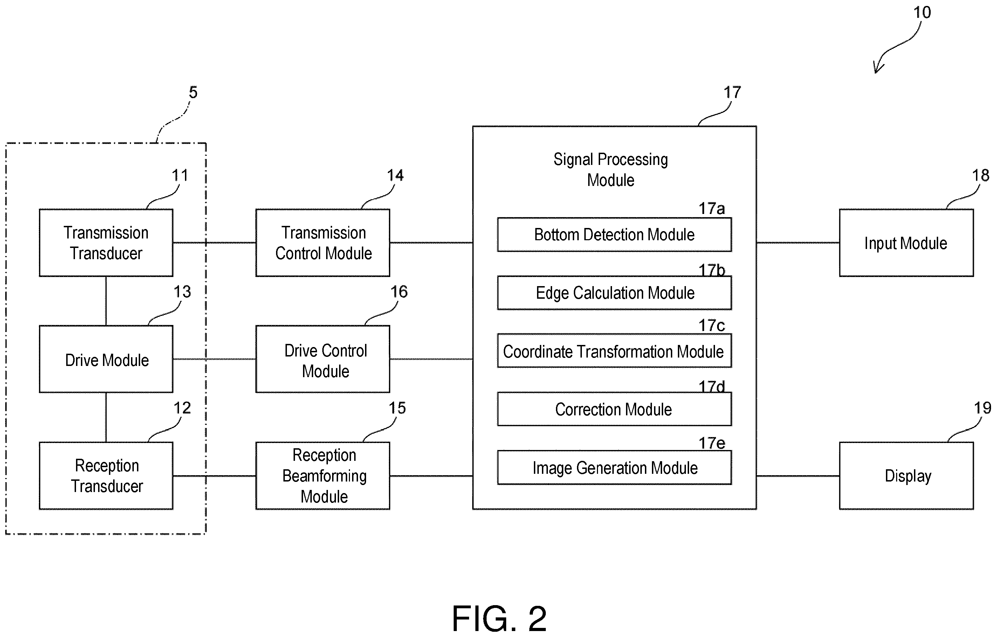

FIG. 2 is a block diagram showing a configuration of the underwater detection device 10.

The underwater detection device 10 includes a transmission transducer 11 and a reception transducer 12. The transducer module 2 of FIG. 1 is configured by the transmission transducer 11 and the reception transducer 12. The transmission transducer 11 and the reception transducer 12 are directed into the water at a predetermined tilt.

The transmission transducer 11 and reception transducer 12 are, for example, array of ultrasonic transducers. For example, the transmission transducer 11 has a configuration in which a plurality of ultrasonic transducer is arranged in a line. A sinusoidal transmit signal is applied to each ultrasonic transducer. Thus, ultrasonic waves are transmitted from each ultrasonic transducer. By controlling the phase of the transmitted signal applied to each ultrasonic transducer, the transmission beam 3 of a predetermined thickness is formed. The transmission beam 3, when viewed in the thickness direction, spreads in a fan shape at a center angle of a predetermined angle (e.g., 180°). In the present embodiment, the transmission beam 3 is transmitted at a predetermined tilt. The transmission beam 3 may be transmitted vertically downward.

The reception transducer 12 has, for example, a configuration in which a plurality of ultrasonic transducers is arranged in a line. For example, the alignment direction of the ultrasonic transducer of the reception transducer 12 is perpendicular to the alignment direction of the ultrasonic transducer of the transmission transducer 11. That is, the ultrasonic transducer of the reception transducer 12 is aligned in the spreading direction of the transmission beam 3 (fan-shaped spreading direction). The alignment direction of the ultrasonic transducers of the transmission transducer 11 and the reception transducer 12 may not necessarily be perpendicular, as long as they intersect each other.

Each ultrasonic transducer of the reception transducer 12 receives the reflected wave of the ultrasonic wave transmitted from the transmission transducer 11. Each ultrasonic transducer of the reception transducer 12 outputs a reception signal of amplitude corresponding to the intensity of the reflected wave. By performing phase control (beamforming) with respect to the reception signal, a plurality of reception beams arranged in the direction of the spread angle of the transmission beam 3 (center angle of the fan shape) is formed. Thus, for each reception beam, i.e., every predetermined angle in the direction of the spread angle of the transmission beam 3 (center angle of the fan), the reception signal of the reflected wave is generated. The smaller the pitch of the reception beam to increase the number of reception beams, the more resolution of underwater detection in the direction of the spread angle of the transmission beam 3 (the center angle of the fan-shaped).

The drive module 13 drives the transmission transducer 11 and the reception transducer 12 integrally in the direction of tilt direction and rotation about the vertical axis, to change the orientation of the transmission transducer 11 and the reception transducer 12. With the drive module 13, the direction of the transmission beam 3 and the reception beam described above is changed. The drive module 13 includes a motor serving as a drive source, a drive mechanism, a detecting means for detecting the drive position (rotary encoder or the like). The drive position is output to a drive control module 16 and is used for control in the drive control module 16.

Furthermore, the underwater detection device 10 includes a transmission control module 14, a reception beamforming module 15, the drive control module 16, a signal processing module 17, an input module 18, and a display 19. The transmission control module 14, the reception beamforming module 15, the drive control module 16, the signal processing module 17, the input module 18, and the display 19 are installed in the wheelhouse or the like of a ship. These components may be unitized into one housing, or some components such as the display 19 may be separated. The transmission control module 14, the reception beamforming module 15 and the drive control module 16 are communicatively connected to the transmission transducer 11, reception transducer 12 and the drive module 13 respectively by a signal cable.

The transmission control module 14 outputs a transmission signal to the transmission transducer 11 by the control from the signal processing module 17. The transmission control module 14 supplies a transmission signal to the ultrasonic transducer of the transmission transducer 11 so that a flat transmission beam 3 which extends in a fan shape is formed as described above.

As described above, the reception beamforming module 15 applies the process of beamforming to the reception signal input from each ultrasonic transducer of the reception transducer 12 to form a plurality of reception beams arranged in the angular direction of the center angle of the fan of the transmission beam 3. Then, the reception beamforming module 15 outputs the reception signal to the signal processing module 17 for each reception beam.

The drive control module 16 controls the drive module 13 by the control from the signal processing module 17. Thus, as described above, the transmission transducer 11 and the reception transducer 12 are driven integrally, with this, the direction of the transmission beam 3 and the reception beam is changed.

The signal processing module 17 controls each module in accordance with a program held in advance. Further, the signal processing module 17 processes the reception signal input from the reception beamforming module 15 to generate an image of the detection range and displays the image on the display 19. The signal processing module 17 includes arithmetic processing circuits such as CPUs (Central Processing Unit), and storage media such as ROMs (Read Only Memory), RAMs (Random Access Memory), and hard disks. The program is held in the storage media. The signal processing module 17 may be comprised of an integrated circuit such as FPGA (Field-Programmable Gate Array).

The signal processing module 17 may not necessarily be constituted by one integrated circuit, a plurality of integrated circuits and arithmetic processing circuits may be configured in combination. For example, the signal processing module 17 may individually include an arithmetic processing circuit for controlling the transmission transducer 11 and the drive module 13, and an arithmetic processing circuit for processing the reception signal input from the reception beamforming module 15 to generate a detection image.

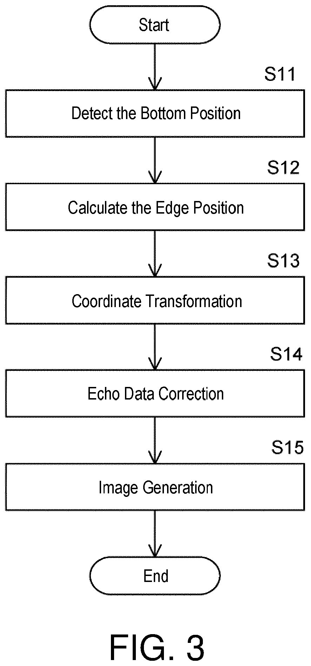

The signal processing module 17 includes a bottom detection module 17a, an edge calculation module 17b, a coordinate transformation module 17c, a correction module 17d, and an image generation module 17e as a functional module to be imparted by the program. The processing content of each functional module will be described later with reference to FIG. 3.

The input module 18 is a user interface that receives input from a user. The input module 18 includes input means such as a mouse or a keyboard. The input module 18 may include a touch panel integrated in the display 19.

The display 19 displays an image generated by the signal processing module 17. The display 19 includes a display device such as a monitor or a liquid crystal panel. As will be described later, a detection image and a bottom image are displayed on the display 19. In addition, the underwater detection device 10 includes a configuration for detecting an orientation and position, for example, a Global Positioning System (GPS), or the like.

The signal processing module 17 acquires the signal intensity (volume data) of the reflected wave for the three-dimensional detection range in which the transmission beam 3 moves with the progress of the ship 1. Specifically, the signal processing module 17 refers to the reception signal for each angle range divide the transmission beam 3 in the angular direction of the center angle of the fan-shaped by a predetermined resolution (angle range of each reception beam formed by the reception beamforming module 15). Here, half the time of the time difference from the timing of transmitting the transmission beam 3 to the timing of receiving the reflected wave corresponds to the distance to the target that has reflected the reflected wave. The signal processing module 17 associates the elapsed time from the timing of transmitting the transmission beam 3, and the intensity of the reception signal for each reception beam. That is, the signal processing module 17 acquires the intensity of the reception signal at a predetermined time interval from the timing of transmitting the transmission beam 3. This time axis corresponds to the distance from the reception transducer 12.

Thus, for each angular range of each reception beam, the data group associated with the elapsed time (distance) and the intensity of the reception signal is acquired. The signal processing module 17 repeatedly executes the above process at predetermined time intervals while the transmission beam 3 moves with the progress of the ship 1. Thus, for the entire detection range in which the transmission beam 3 moves, the data group in which the elapsed time (distance) and the intensity of the reception signal are associated is acquired. This data group constitutes the volume data of the detection range.

The signal processing module 17 generates a detection image based on the volume data acquired by the above-described process, and displays the detection image on the display 19. For example, the signal processing module 17 performs surface rendering or volume rendering process on the volume data, and generates a three-dimensional image (detection image) indicating the distribution of the signal intensity when the detection range is referred to from a predetermined viewpoint direction. The detection image is colored according to the signal intensity of the reflected wave. The viewpoint direction of the detection image may be changed by an input to the input module 18.

Incidentally, in the underwater detection device 10 having the above-described configuration, the transmission beam 3 is incident obliquely with respect to the bottom 4. Therefore, the distribution range of the echo data indicating the intensity of the reflected wave from the bottom 4 becomes wider toward the end of the arc of the transmission beam 3 due to the influence of the beam width of the transmission beam 3. As a result, the three-dimensional image of the bottom 4 is displayed in a state where both ends are raised in a V-shape than the position of the actual bottom 4.

When the signal intensity of the bottom 4 and the signal intensity of the fish school 5 or the like are approximate to each other, colors having intensity levels approximate to each other are added to the bottom and the fish school or the like. Therefore, in the display image, the fish school 5 or the like is assimilated to the bottom 4, and the stereoscopic visibility of the fish school 5 or the like is deteriorated.

In order to solve such a problem, in the present embodiment, a display image is configured such that the bottom is properly displayed and the states of the bottom and the target can be visually recognized in a good manner. This process will be described below.

FIG. 3 is a flowchart showing a process for generating an image in water.

The signal processing module 17, based on the echo data of the reflected wave of each orientation (orientation corresponding to the reception beam) acquired in the transmission of one transmission beam 3, detects the bottom position at step S11. The process of step S11 is performed by the function of the bottom detection module 17a shown in FIG. 2. Next, at step S12, the signal processing module 17 calculates the edge position of the echo data of the bottom 4 (hereinafter, referred to as "edge position") based on the bottom position detected in step S11. The process of step S12 is performed by the function of the edge calculation module 17b shown in FIG. 2. Thus, for each orientation divided by the resolution of the reception beam in the direction of the center angle of the fan-shaped transmission beam 3, the bottom position and the edge position is detected.

Then, at step S13, the signal processing module 17 transforms the coordinate of the bottom position and the edge position acquired for each orientation in the above process, to the coordinate position of the x-y coordinate system to be developed in the same plane as the fan-shaped plane of the transmission beam 3. The process of step S13 is performed by the function of the coordinate transformation module 17c shown in FIG. 2. Furthermore, at step S14, the signal processing module 17 calculates the correction data in a range from a transmission position, which is the depth of the transmission transducer 11, to the bottom position based on the echo data between the transmission position and the edge position. The process of step S14 is performed by the function of the correction module 17d shown in FIG. 2. Then, at step S15, the signal processing module 17 generates a detection image of a color corresponding to the signal intensity of the correction data based on the correction data (volume data) accumulated in accordance with the progress of the ship 1, and further, based on the bottom position, generates a bottom image of a color different from the detection image, and displays the generated detection image and the bottom image on the display 19. The process of step S15 is performed by the function of the image generation module 17e shown in FIG. 2.

The process of each step in FIG. 3 will be described below.

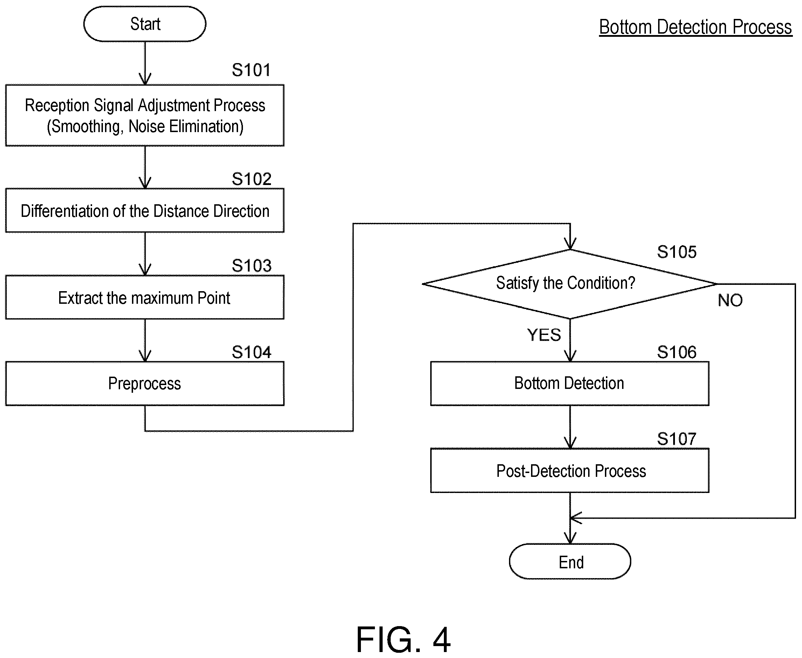

FIG. 4 is a flowchart showing a bottom detection process in step S11 of FIG. 3. The process of FIG. 4 is performed for the reception beam which is acquired for each orientation in response to the transmission of each transmission beam 3.

The signal processing module 17 executes adjustment process such as smoothing and noise elimination for the reception signal of each orientation at step S101, with respect to the reception signal after the adjustment process, performs differentiation of the distance direction (time-axis direction) at S102. Then, the signal processing module 17 extracts the maximum point from the differential signal of each orientation at step S103.

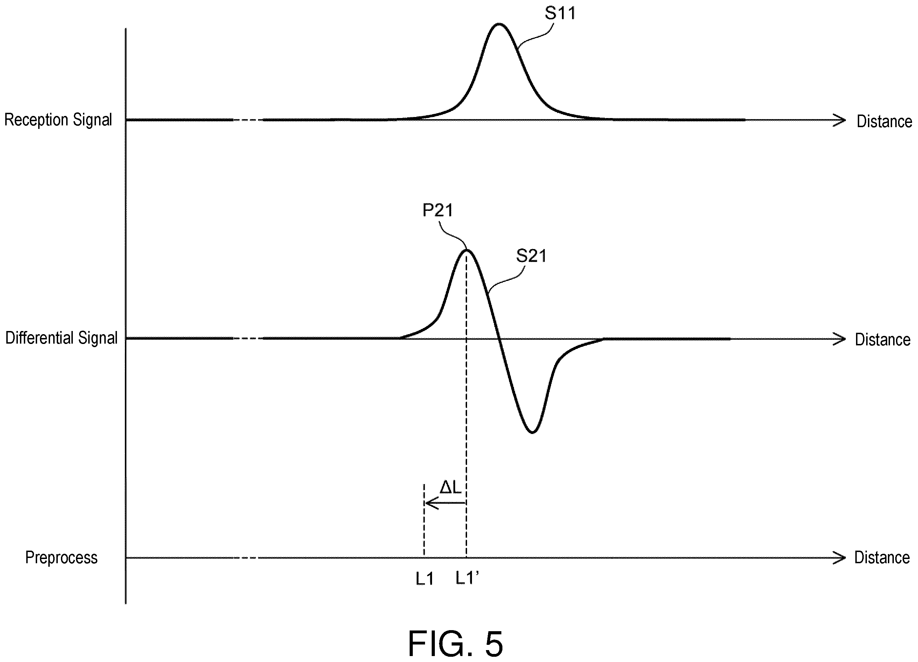

FIG. 5 is a time chart showing a reception signal of a predetermined orientation and a state of a differential signal obtained by differentiating the reception signal.

As shown in the upper stage of FIG. 5, in the reception signal of a predetermined orientation, at the distance position of the target or the bottom present in the orientation, the waveform S11 of amplitude correspond to the intensity of the reflected wave occurs. Therefore, even in the differential signal obtained by differentiating the reception signal, the S-shaped waveform S21 is generated at the same position as the waveform S11. At step 103 of FIG.4, the signal processing module 17 extracts the maximum point P21 of the waveform S21 occurring in the differential signal. If there is a fish school and a bottom in that orientation, the waveforms S11, and S21 occur at a plurality of distance positions. Therefore, in this case, a plurality of local maximum point P21 is also extracted.

Returning to FIG. 4, in order to approach the maximum point group extracted by the step S103 to the rising position of the reception signal and the differential signal, at step S104, the signal processing module 17 executes preprocess for moving the distance position of these maximum point group to the front corresponding to the half of the transmission period. As a result, as shown in the lower part of FIG. 5, the detection point group is obtained at a distance L1 which is a distance width $\Delta L$ (a distance corresponding to a half period of the transmission period) ahead of the distance L1' of the local maximum point P21.

At step S105, the signal processing module 17 determines whether or not a predetermined condition that specifies that the detected point group is the bottom 4 is satisfied. If the detected point group satisfies the condition of the bottom, then at step S106, the signal processing module 17 detects the distance L1 of the detected point group as a distance defining the position of the bottom of each orientation.

Then, at step S107, the signal processing module 17 performs post-detection process on the detected point groups to suppress variations in distances of the detected point groups. Specifically, the signal processing module 17 executes process such as a moving average between the detection point groups acquired at a plurality of transmission timing before the transmission timing, to suppress the variation in the distance of the detection point group. The signal processing module 17 acquires each distance L1 of the detected point group as the distance of the bottom. As a result, the signal processing module 17 ends the bottom detection process.

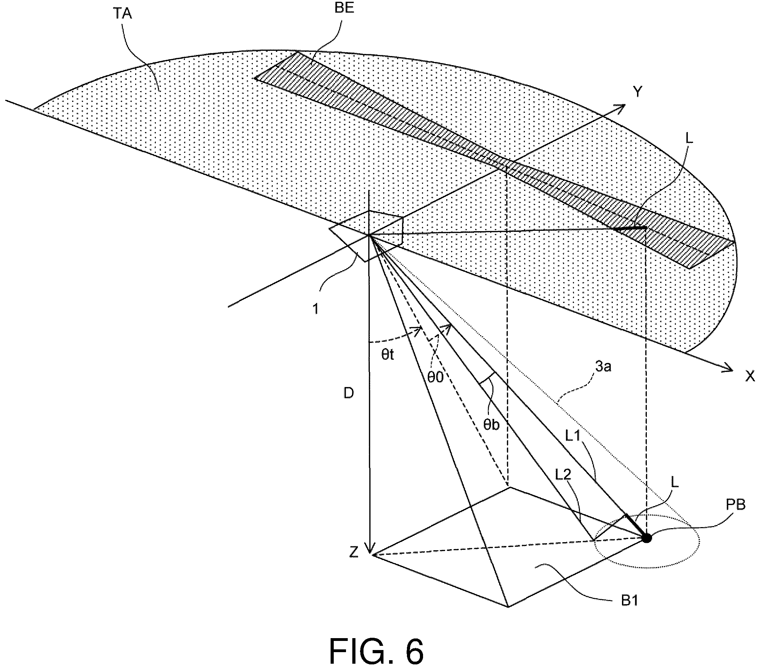

Next, the edge calculation process in step S12 of FIG. 3 will be described with reference to FIG. 6.

FIG. 6 is a diagram showing various parameters used in the edge calculation process.

In FIG. 6, PB is a detected point of the bottom 4 in a predetermined direction acquired in the step S107 of FIG. 4. Further, L1 is the distance from the transducer module 2 to the detection point PB obtained by the above process, L2 is the distance from the transducer module 2 to the edge position. In step S13 of FIG. 3, the signal processing module 17, based on various parameters shown in FIG. 6, calculates the distance L2 to the edge position.

Incidentally, in FIG. 6, the transmission region TA of the transmission beam 3, and the distance range BE of the echo data acquired with respect to the bottom 4 is schematically shown in a state of being projected on the horizontal plane. In addition, among the transmission beams 3, a fragment partial 3a of the transmission beams 3 extracted by the reception beams of the orientation is shown. B1 is a rectangular plane parallel to the X-Y plane. One vertex of the plane B1 coincides with the detection point PB, and the other two vertices, respectively, intersect the perpendicular from the center of the distance range BE toward the Z-axis positive direction and the perpendicular from the transducer module 2 toward the Z-axis positive direction.

In FIG. 6, D is the bottom depth (m), $\theta t$ is the tilt (deg.) of the transmission beam 3 with respect to the vertical direction. Further, $\theta 0$ is the orientation of the central axis of the reception beam (deg.), $\theta b$ is the half angle of the beam width of the reception beam (deg.). The half angle $\theta b$ can be decomposed into a horizontal component $\theta h$ and a vertical component $\theta v$, neither of which is shown in FIG. 6. By using these parameters, the difference L of the distance L1, L2 is calculated by the following equation (1).

$$L = L1 - L2$$

$$= D \cdot \frac{1}{\cos \theta_t} \cdot \frac{1}{\cos \theta_o} - \frac{D}{\cos(\theta - \theta_b)}$$

$$= \frac{D}{\cos \theta_t \cos \theta_o} - \frac{D}{\cos \left\{ \tan^{-1} \left( \frac{\sqrt{\tan^2 \theta_o + \sin^2 \theta_t}}{\cos \theta_t} \right) - \theta_b \right\}} \quad \cdots \ (1)$$

Here, $\theta b$ is calculated by the following equation (2).

$$\theta_b = \sqrt{\frac{\theta_h \theta_v}{\theta_h \sin^2 \left( \frac{\sin \theta_t}{\tan \theta_o} \right) + \theta_v \cos^2 \left( \frac{\sin \theta_t}{\tan \theta_o} \right)}} \quad \cdots \ (2)$$

The signal processing module 17 calculates the difference L by substituting the values of the various parameters in the above equations (1) and (2). Here, the values of the various parameters can be grasped in the signal processing module 17 based on the formation state of the reception beam. The signal processing module 17 calculates the distance to the edge position by subtracting the distance L1 by the difference L. As a result, the process of step S12 ends.

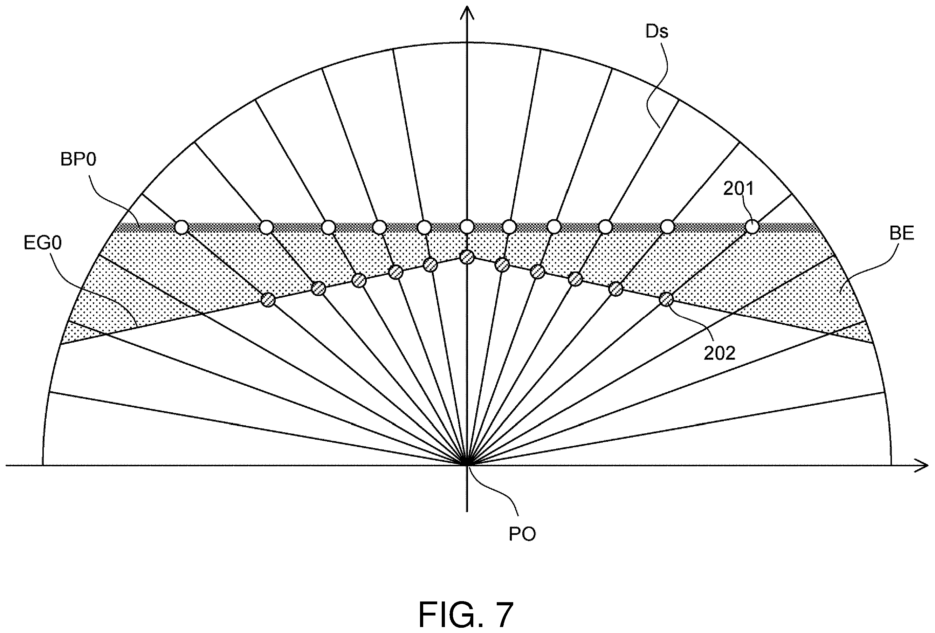

Next, the coordinate transformation process in step S13 of FIG. 3 will be described with reference to FIG. 7 to FIG. 9.

FIG. 7 schematically shows a state in which the bottom position 201 and the edge position 202 is acquired for each orientation Ds, by steps S11 and S12 in FIG. 3. In FIG. 7, PO is the position of the transducer module 2, i.e., the reference position of the orientation Ds. In addition, BE is a distance range in which echoes reflected from the bottom 4 are distributed, and BP0 is the bottom position defined by the bottom position 201, and EG0 is the edge of the distance range BE defined by the edge position 202. The distance L1 in FIG. 6 corresponds to the distance from the reference position PO to the bottom position 201, and the distance L2 in FIG. 6 corresponds to the distance from the reference position PO to the edge position 202. In FIG. 7, for convenience, the angle pitch of the orientation Ds is shown rougher than the actual angle pitch. The angular pitch of the actual orientation Ds is about 1°.

In step S13 of FIG. 3, the x-y coordinate system is developed in the same plane as the fan-shaped plane of the transmission beam 3.

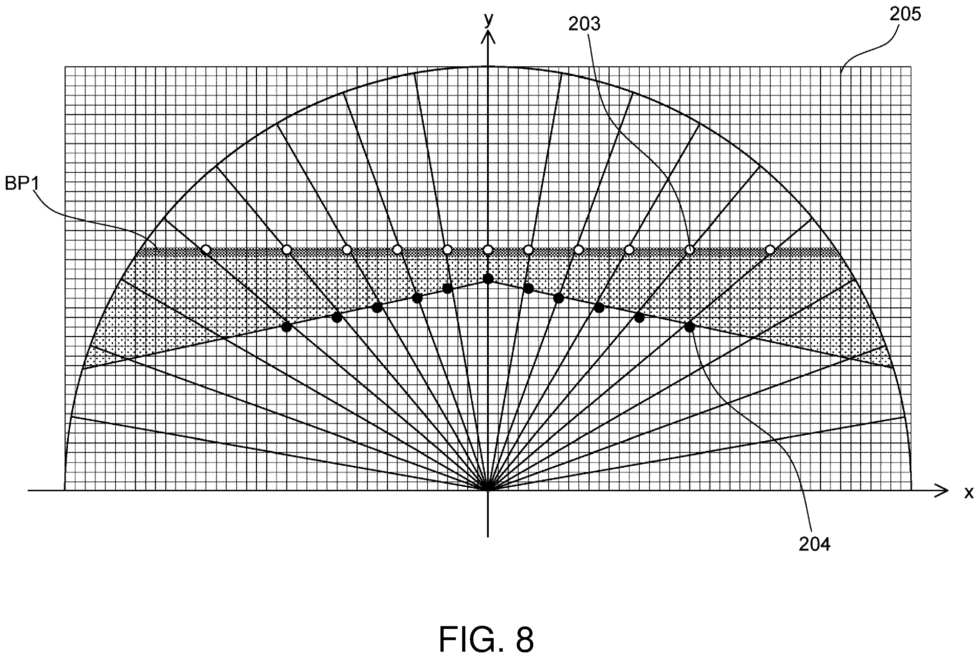

FIG. 8 schematically shows a state in which the x-y coordinate system 205 is applied to the coordinate system of FIG. 7. In the x-y coordinate system 205, the x-axis and y-axis are orthogonal to each other. The relationship between the y-axis positive direction and the traveling direction of ship 1 varies by changing the direction of the transducer module 2 in the horizontal direction. Further, the coordinate plane is partitioned in a grid shape at a constant pitch in the x-axis direction and the y-axis direction, respectively, and a large number of coordinate points are set at the intersection of the grid.

The signal processing module 17 shifts the bottom position 201 and the edge position 202 of FIG. 7 to the nearest coordinate point of the coordinate point of FIG. 8, respectively. Thus, as shown in FIG. 8, in the x-y coordinate system 205, the bottom position 203 and the edge position 204 is set. In response, the bottom position BP0 of FIG. 7 shifts to the bottom position BP1.

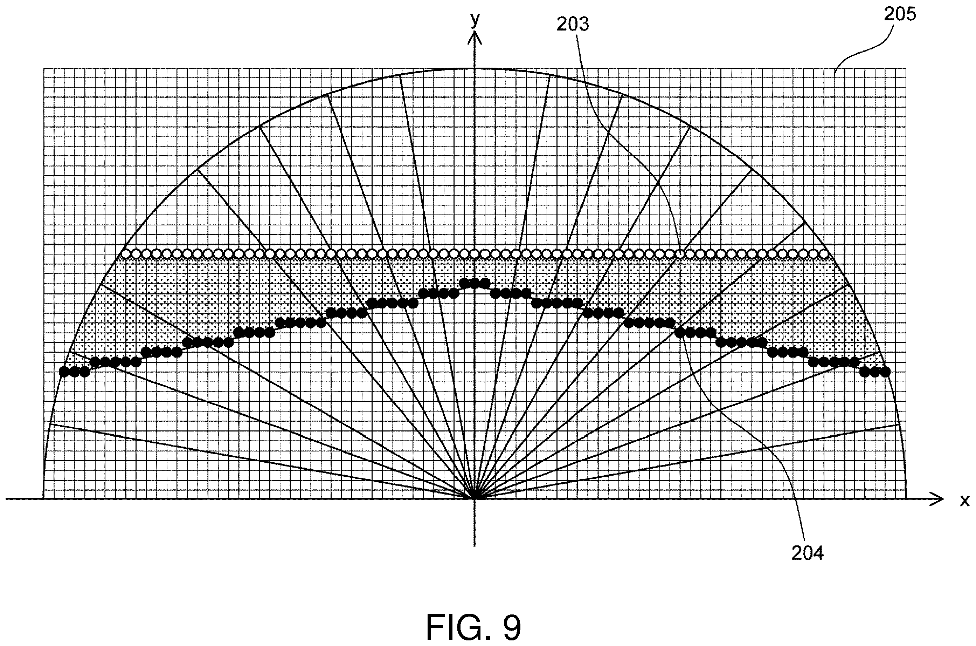

Thereafter, the signal processing module 17 interpolates the bottom position 203 and the edge position 204 to the coordinate point of the gap between the bottom position 203 and the coordinate point of the gap between the edge positions 204 by an interpolation process such as linear interpolation. FIG. 9 shows the bottom position 203 and the edge position 204 after interpolation. As a result, the coordinate transformation process at step S13 of FIG. 3 ends.

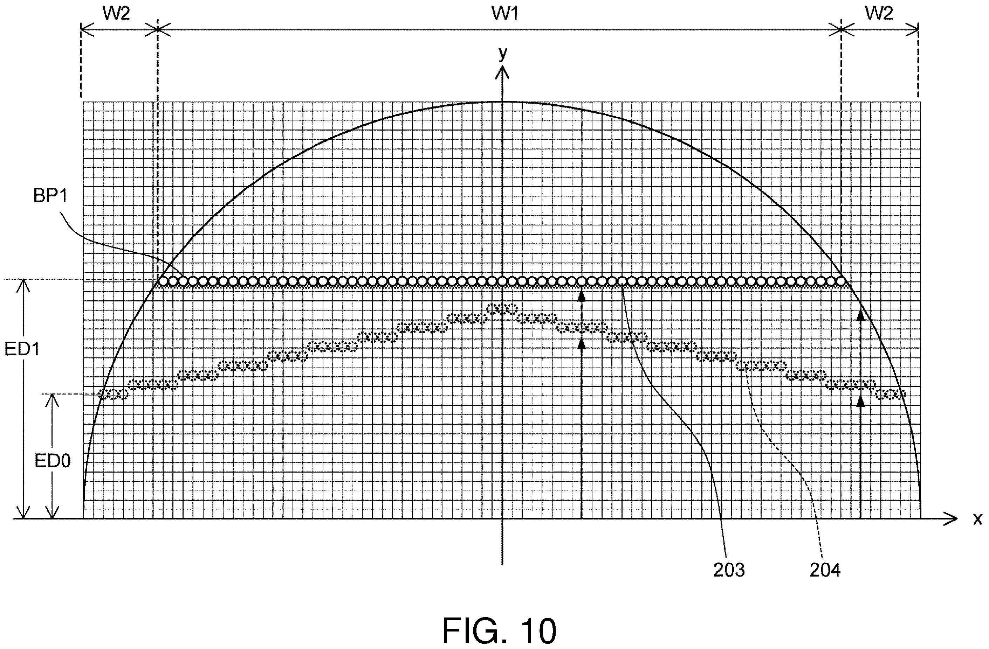

Next, the correction process at step S14 of FIG. 3 will be described with reference to FIG. 10.

In step S14 of FIG. 3, the signal processing module 17 calculates the correction data in a range from the transmission position to the bottom position 203 based on the echo data ED0 between the transmission position and the edge position 204. Here, the echo data ED0 of the range W1 where the bottom position 203 exist is extended to the bottom position 203 by the interpolating process in the y-axis direction. That is, the signal processing module 17 evenly disperses the echo data ED0 of each coordinate point aligned in the y-axis direction to the coordinate point up to the bottom position 203, and interpolate the echo data to the coordinate point where the echo data ED0 is not set, by the interpolation process in the y-axis direction. Here, for example, linear interpolation is used as the interpolation process. However, the method of interpolation is not limited to linear interpolation, and other interpolation methods may be used.

In addition, the echo data ED0 of the range W2 where the bottom position 203 does not exist is extended to the position of the upper limit distance of the detection range (the position of the semicircle in FIG. 10) by the interpolation process in the y-axis direction. That is, the signal processing module 17 evenly disperses the echo data ED0 of each coordinate point aligned in the y-axis direction to the coordinate point up to the position of the upper limit distance of the detection range (the position of the semicircle in FIG. 10), and interpolate the echo data to the coordinate point where the echo data ED0 is not set, by the interpolating process (e.g., linear interpolation) in the y-axis direction.

Thus, by performing the interpolation process in the y-axis direction to the echo data of the ranges W1 and W2, the correction data ED1 is calculated for the range between the transmission position and the bottom position 203. As a result, the correction process in step S14 of FIG. 3 ends.

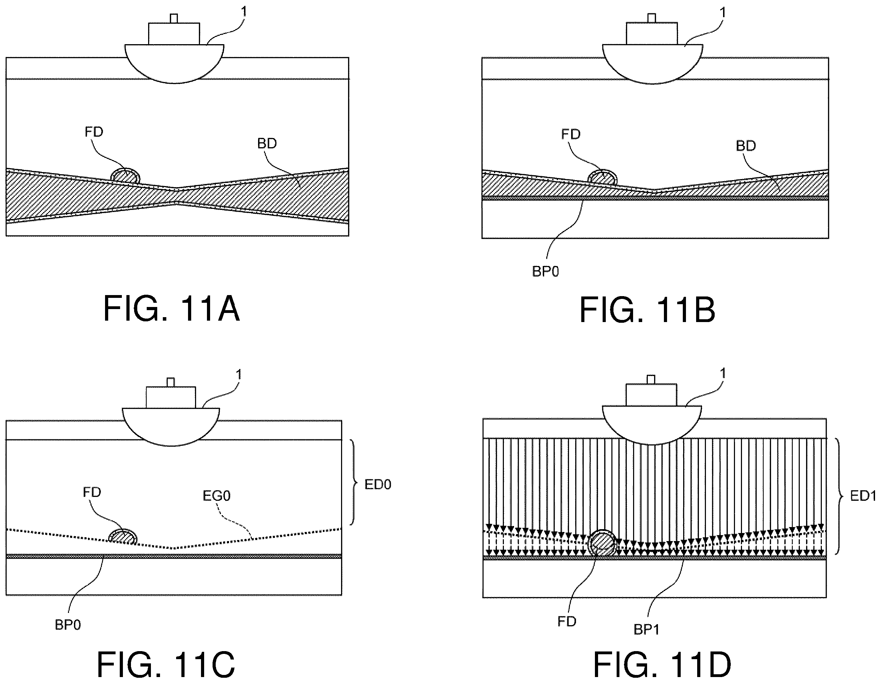

FIG. 11A to FIG. 11D are diagrams schematically showing the process of steps S11 to S14 of FIG. 3.

When one transmission beam 3 is transmitted from the transducer module 2 installed at the bottom of ship 1, the echo data as shown in FIG. 11A is acquired. Here, the echo data includes the echo data BD of the bottom and the echo data FD of the fish school. As described above, due to the influence of the transmission beam 3 transmitted in the oblique direction, the echo data BD of the bottom becomes wider toward the left and right edges.

Next, the bottom detection process of S11 of FIG. 3 is performed on the echo data of FIG. 11A, and the bottom position BP0 (bottom position 201) is calculated as shown in FIG. 11B. Furthermore, the process of step S12 of FIG. 3 is performed, and the edge of the bottom echo EG0 (edge position 202) is calculated as shown in FIG. 11C. Thereafter, the coordinate transformation process of step S13 of FIG. 3 is performed, and the correction process of step S14 is further performed. Thus, the echo data ED0 existing between the edge of the bottom echo EG0 and the transmission position in FIG. 11C is extended by the interpolation process as shown in FIG. 11D, and the correction data ED1 is acquired. Thus, the bottom position BP1 is defined, and the correction data ED1 including the corrected echo data FD of the fish school is acquired.

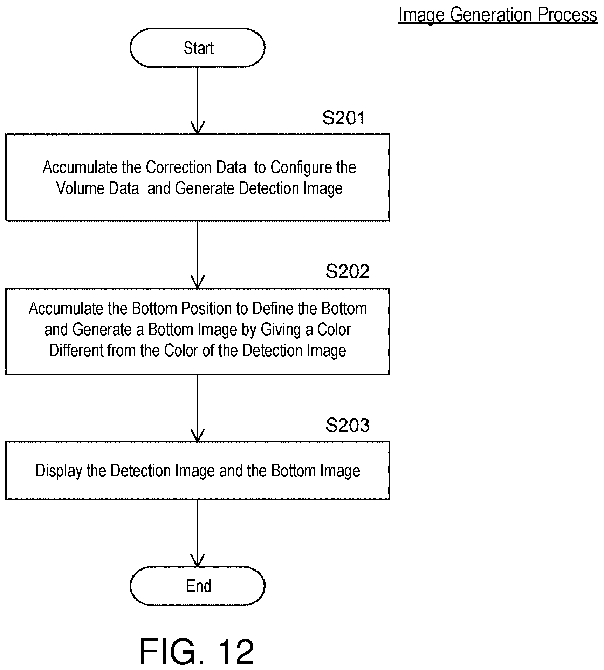

Next, the image generation process in step S15 of FIG. 3 will be described with reference to FIG. 12.

When the correction data ED1 is calculated by the above process, then at step S201, the signal processing module 17 accumulates the correction data ED1 calculated by the predetermined number of processes prior to the current process to configure the volume data, performs process such as volume rendering or surface rendering on the configured volume data, and generates detection images indicating distributions of signal intensities when the volume data is viewed from a predetermined viewpoint. Here, the detection image is given a color corresponding to the signal intensity.

In addition, at step S202, the signal processing module 17 accumulates the bottom position 203 calculated by the process from the present process to the predetermined number of times before, defines the bottom, and generates a bottom image by giving a color different from the color of the detection image to the defined bottom. Then, at step S203, the signal processing module 17 displays the generated detection image and the bottom image on the display 19.. As a result, the image generation process in the current process flow ends.

Next, a display example of an image displayed by the above process will be described in comparison with a display example of an image displayed by the previous process.

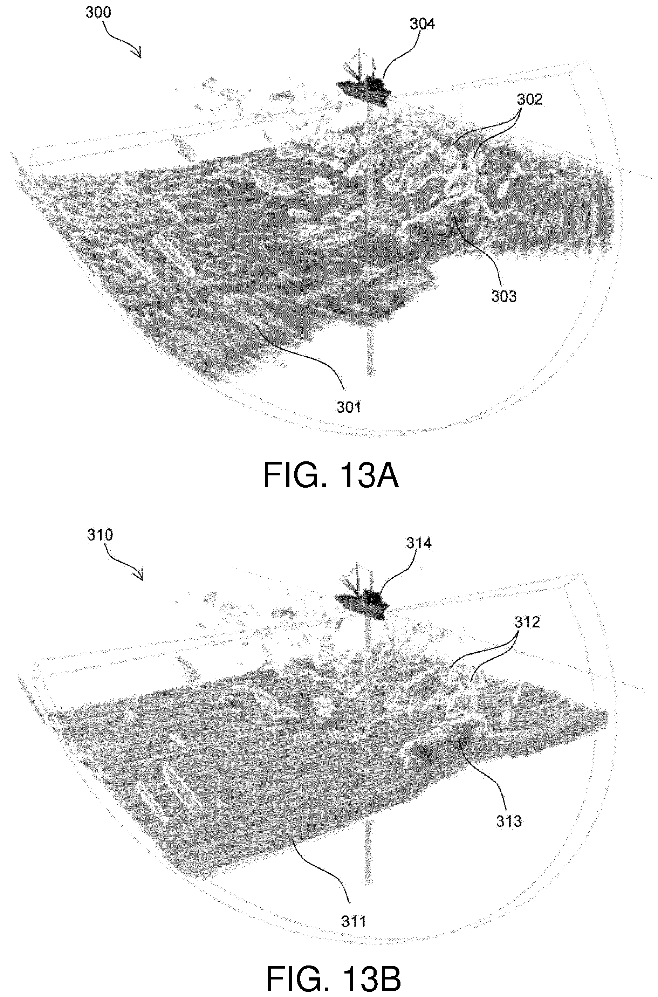

FIG. 13A is a diagram showing a display example of an image according to a comparative example, and FIG. 13B is a diagram showing a display example of an image according to the embodiment.

In the comparative example, the processing of steps S11 to S14 in FIG. 3 is not performed, and the echo data acquired by the processing from the present processing to the predetermined number of times before is integrated as it is, thereby configuring the volume data. In addition, in the comparative example, a color corresponding to the signal intensity is uniformly attached to the display image without distinguishing between a target such as a fish school and a bottom.

As shown in FIG. 13A, in the display image 300 of the comparative example, the thickness of the bottom 301 increases toward the left and right ends of the bottom 301. Therefore, the user cannot correctly grasp the position of the bottom from the display image 300 of the comparative example. In the display image 300 of the comparative example, the fish school 302, the fish reef 303, and the bottom 301 are respectively provided with colors of approximate intensity levels. Therefore, in the display image 300, the fish school 302 and the fish reef 303 are assimilated to the bottom 301, and the stereoscopic visibility of the fish school 302 and the fish reef 303 is deteriorated.

On the other hand, in the display image 310 of the embodiment, as shown in FIG. 13B, the bottom 311 is displayed in a state in which the bottom position is properly detected by the above-described bottom detection process. Therefore, in the display image 310, the thickness of the bottom 311 is substantially constant, and the thickness of the bottom does not increase toward the left and right ends of the bottom 311 as in the comparative example. Therefore, the user can correctly grasp the position of the bottom by referring to the display image 310 of the embodiment.

In the display image 310 of the embodiment, colors different from those of the fish school 312 and the fishing bank 313 are added to the bottom 311. Therefore, in the display image 310, assimilation of the fish school 312 and the fishing bank 313 to the bottom 311 is suppressed. As a result, in the display image 310, the stereoscopic visibility of the fish school 312 and the fishing bank 313 can be remarkably enhanced.

The display images 300 and 310 of FIG. 13A and FIG. 13B include ship images 304 and 314, respectively. As a result, the user can intuitively grasp the relative positional relationship between the ship and the fish school, fish reef, and bottom.

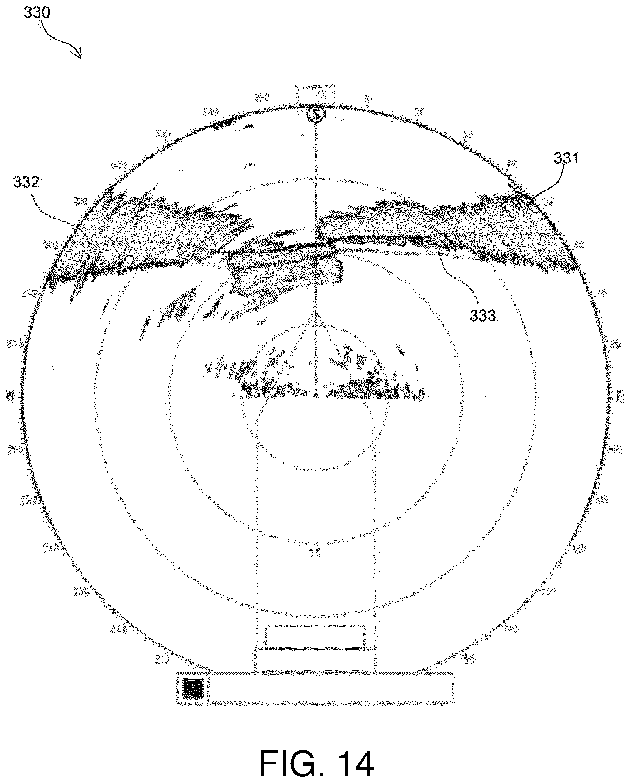

FIG. 14 is a diagram illustrating another display example when broken lines 332 and 333 indicating the bottom position 203 and the edge position 204 calculated by the process of steps S11 to S13 of FIG. 3 are displayed on the display image 330 of the echo data.

Here, echo data acquired by one transmission is displayed as it is. Therefore, the width of the bottom image 331 increases toward the left and right ends. Near the center of the bottom image 331 in the width direction, a broken line 332 showing the bottom position 203 is displayed. In addition, a broken line 333 indicating the edge position 204 is displayed near the edge of the bottom image 331 in the width direction.

From the display example of FIG. 14, it can be seen that by the process of steps S11 to S13 of FIG. 3, the bottom position 203 and the edge position 204 are appropriately calculated so as to correspond to the actual bottom. In the display image 330, the user can accurately grasp the actual position of the bottom by referring to the broken line 332.

Effects of Embodiments

According to the above embodiment, the following effects can be achieved.

By performing the processing of FIG. 3, as shown in FIG. 13B, the bottom 311 can be displayed at an appropriate position corresponding to the actual position of the bottom. In addition, since the bottom 311 and the target (fish school 312 and fishing bank 313) are displayed in different display modes (different colors), the user can distinguish the bottom from the target (fish school 312 and fishing bank 313) and visually recognize them well.

In the present embodiment, the bottom image (bottom 311) and the detection image (fish school 312 and fishing bank 313) of the region from the bottom 311 to the water surface are displayed in different colors in the display image 310. Thus, the user can clearly distinguish the bottom image (bottom 311) and the target (fish school 312 and fishing bank 313) by the difference in color. Therefore, the states of the bottom image (bottom 311) and the target (fish school 312 and fishing bank 313) can be visually recognized well.

Further, the signal processing module 17, based on the calculation of the above-described equations (1) and (2), calculates the difference L between the bottom position 201 and the edge position 202 as the correction value, and based on the calculated correction value, calculates the edge position 204. As a result, the edge position 204 can be appropriately set.

As shown in FIG. 13B, the signal processing module 17 generates a detection image (fish school 312, fishing bank 313) and a bottom image (bottom 311) when viewed from a predetermined viewpoint based on the corrected data ED1 and the bottom position 203 in the three-dimensional detection range, and displays the generated detection image (fish school 312, fishing bank 313) and bottom image (bottom 311) on the display 19. Thereby, the user can confirm the bottom and the target (fish school, fish reef) three-dimensionally from a predetermined viewpoint.

Modifications

The present invention is not limited to the above embodiments. In addition, embodiments of the present invention can be variously modified in addition to the above-described configuration.

For example, in the above embodiment, the correction data ED1 is calculated for each transmission timing of the transmission beams 3, but the timing for calculating the correction data ED1 is not limited thereto. For example, echo data acquired by successive processing of a predetermined number of times may be stored in a chronological order, correction data may be calculated by performing the processing of steps S11 to S 14 of FIG. 3 for each of the stored echo data, and the image generation process of step S15 of FIG. 3 may be performed on the volume data composed of the calculated correction data group.

Alternatively, the processing of steps S11 to S13 of FIG. 3 may be executed for each transmission timing of the transmission beam 3, flags of the bottom position 203 and the edge position 204 may be added to the echo data, the echo data acquired by the processing of a predetermined number of consecutive times and the flag may be stored in time series, the processing of step S14 of FIG. 3 may be executed for each stored echo data using the flag to calculate correction data, and the image generating process of step S15 of FIG. 3 may be executed for the volume data composed of the calculated correction data group.

The detection method of the bottom position is not limited to the method shown in FIG. 4, and other methods may be used. In addition, the calculation process of the correction data is not limited to the process described in step S14 of FIG. 3, and other methods may be used to set the data of each coordinate position of the range by applying the echo data between the transmission position and the edge position to the range from the transmission position to the bottom position.

Further, in the above embodiment, the edge position 202 is calculated using the difference L (correction value) calculated by the calculation of the equations (1) and (2) as it is, but the edge position 202 may be calculated using a value obtained by multiplying the difference L (correction value) by a predetermined coefficient. For example, the signal processing module 17 receives a coefficient via the input module 18, and obtains the edge position 204 by multiplying the coefficient to the difference L (correction value). The correction data in the range from the transmission depth to the bottom position 203 may be calculated based on the echo data between the transmission position and the edge position 204.

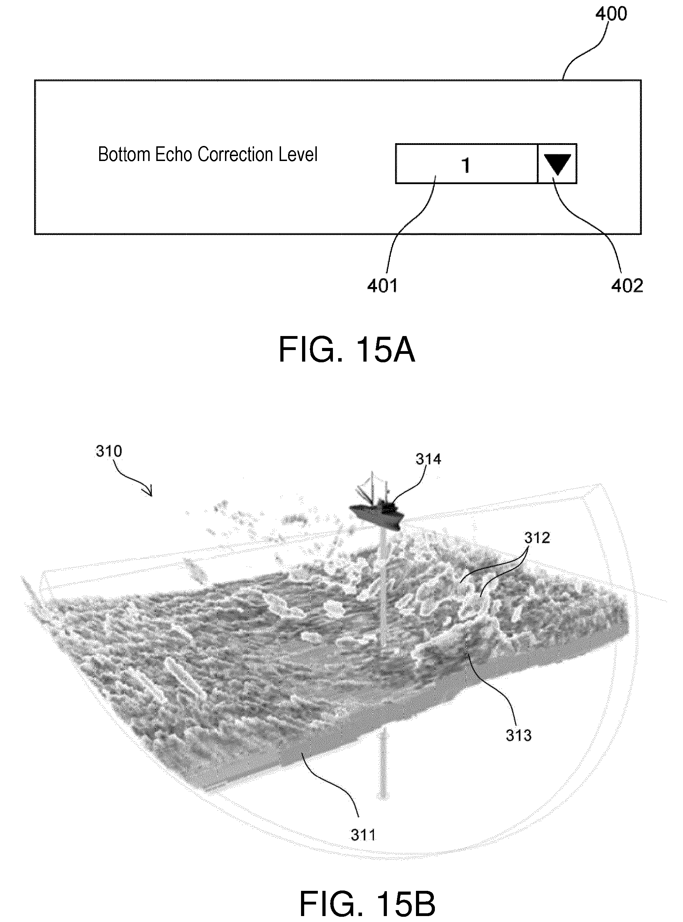

FIG. 15A is a diagram showing a configuration of an operation item according to first modification.

The signal processing module 17, for example, receives the setting of the coefficient by displaying the operation item 400 of FIG. 15A on the display 19. The operation item 400 includes an area 401 for displaying a coefficient and an operator 402 for changing the coefficient. When the user clicks the operator 402 via the input module 18, the selection candidate of the coefficient is pulled down and displayed immediately under the area 401. For example, the selection candidates of the coefficients are set in increments of 0.1 in the range of 1 to 0. The candidate selection of coefficients may include coefficients greater than 1. The user can select a desired coefficient from the selection candidates displayed in a pull-down manner. If there are many choices, a scroll bar may be set in the pull-down area.

When the coefficient is set to less than one, the width between the bottom position 203 and the edge position 204 is narrowed in FIG. 10. As noted above, in the process of step S14 of FIG. 3, the echo data contained in the width between the bottom position 203 and the edge position 204 is excluded, and the echo data from the transmission position to the edge position 204 is extended from the transmission position to the bottom position 203. For this reason, if the coefficient is 1, if there is echo data of the fish school sticking near the bottom between the bottom position 203 and the edge position 204, the image based on this echo data may not be included in the detection image.

On the other hand, if the coefficient is set to less than 1, the width between the bottom position 203 and the edge position 204 becomes narrower, so that this width is less likely to include echo data for fish school sticking near the bottom. Therefore, by setting the coefficient to be less than 1, the user can easily display the fish school attached to the vicinity of the bottom on the display image, and can smoothly confirm the fish school.

FIG. 15B is a diagram showing a display example of the display image 310 when the coefficient is set to 0. In this display image 310, since the coefficient is 0, on the bottom 311, V-shaped image based on unwanted echo data from the bottom remains. Therefore, the separation between the fish school 312, the fishing bank 313, and the bottom 311 is reduced as compared with the case of FIG. 13B. On the other hand, setting the coefficient to 0 increases the possibility of displaying the echo data of the fish school sticking to the vicinity of the bottom as described above. Therefore, it may be assumed that the user can confirm the presence of the fish school from the display image 310 of FIG. 15B.

The bottom detection process shown in FIG. 4 may be changed as follows.

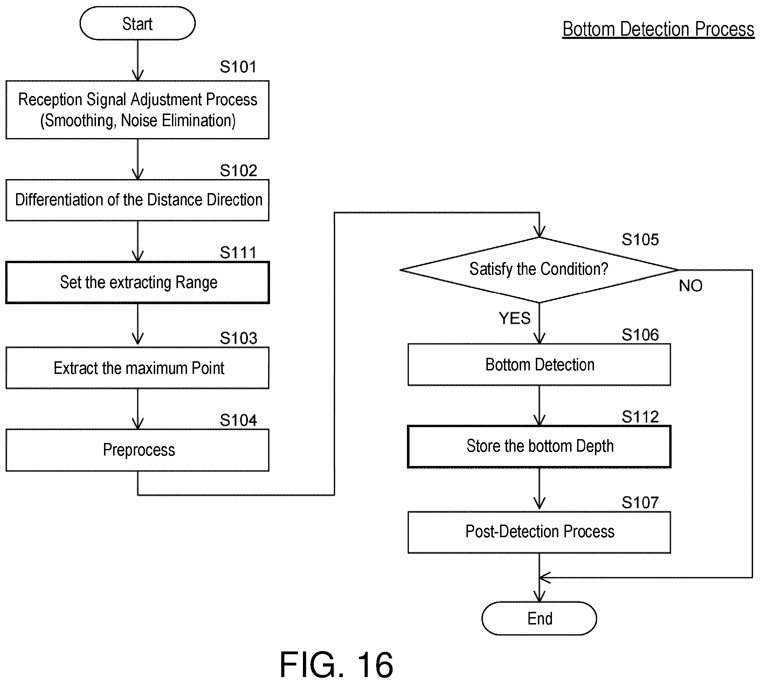

FIG. 16 is a flowchart showing a bottom detection process according to the second modification.

In the flowchart of FIG. 16, S111, S112 of steps is added to the flowchart of FIG. 4. The other steps are the same as the corresponding steps of FIG. 4.

The signal processing module 17, when detecting the bottom position (distance to the bottom) for each orientation in the step S106, calculates and stores the average value of the depth of all the bottom positions at step S112. Then, at step S111, the signal processing module 17 calculates a distance position corresponding to the average value of the depth stored in the step S112 in the process of a plurality of past transmissions of the transmission beams 3, i.e., process up to a plurality of pings, for each orientation as a reference distance position, and the range of the predetermined distance width around the reference distance position is set to the extracting range of the maximum point.

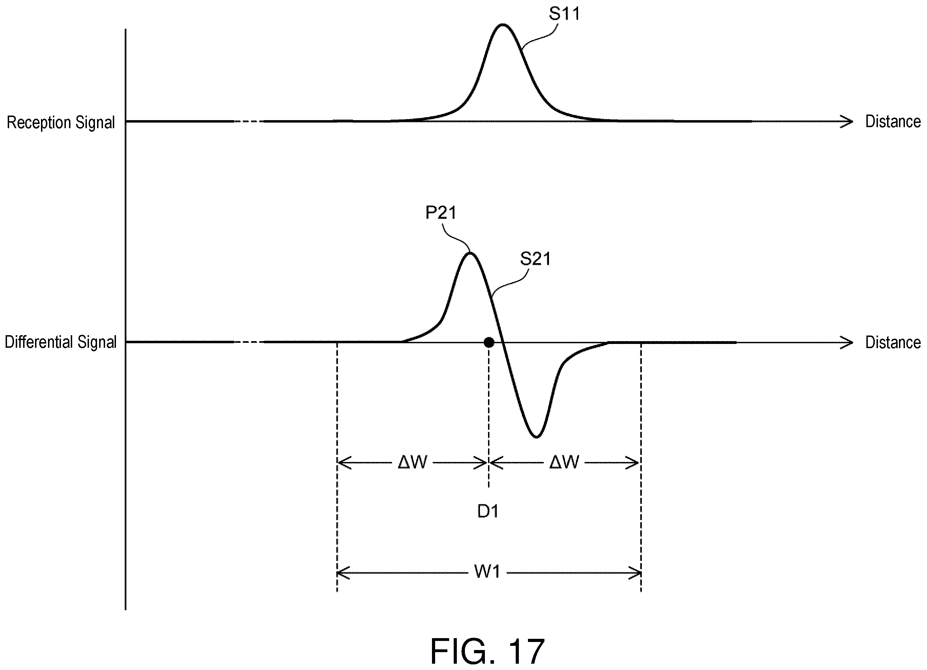

For example, if the distance position D1 shown in FIG. 17 is a reference distance position in a predetermined orientation, the range W1 of the predetermined distance width ΔW around the distance position D1 is set to the extraction range of the maximum point. The distance width ΔW is set in advance to the distance width at which the bottom may be present.

In this way, after setting the extraction range in the step S111 of FIG. 16, the signal processing module 17 extracts the local maximum point included in the extraction range in the subsequent step S103. Then, the signal processing module 17 performs process after the step S104 with respect to the extracted maximum point, and detects the bottom position. The processes after step S104 are the same as those in the above embodiment except for step S112.

According to the process shown in FIG. 16, since the extraction range of the local maximum point is set in the distance range near the bottom detected by the processing result up to the previous time, it is possible to suppress erroneous detection of the bottom position caused by the reception signal based on the echo other than the bottom. Therefore, it is possible to increase the detection accuracy of the bottom position.

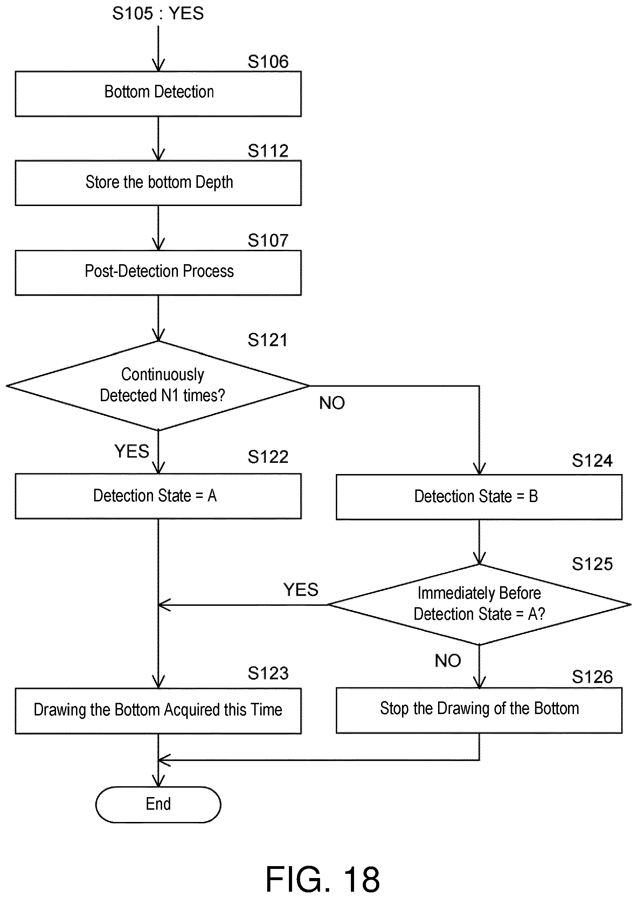

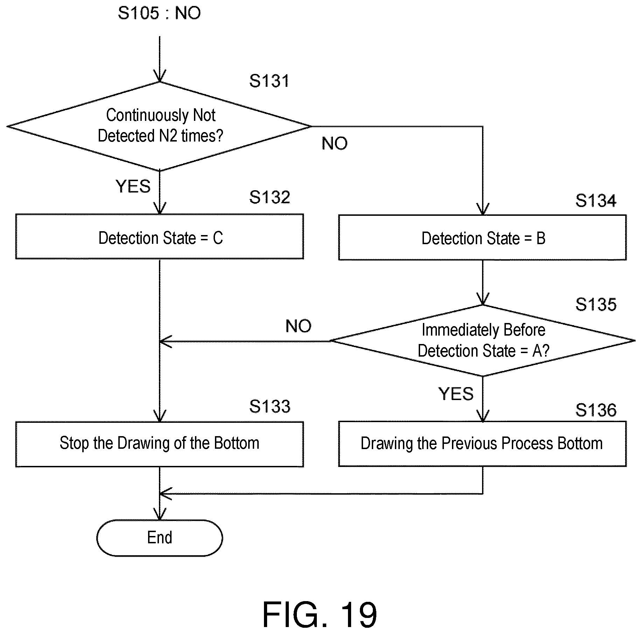

Further, the process steps after the step S105 of FIG. 16 can be changed as shown in FIG. 18 and FIG. 19.

FIG. 18 and FIG. 19 are flowcharts showing a part of the bottom detection process according to the third modification. FIG. 18 is a flowchart showing the process in the case where the determination of the step S105 in FIG. 16 is YES, and FIG. 19 is a flowchart showing the process in the case where the determination of the step S105 in FIG. 16 is NO.

[0116]    Referring to FIG. 18, after performing the process of step S106, S112, S107, the signal processing module 17 determines whether or not the bottom has been continuously detected in the previous N1 transmission process (ping) including the present processing (whether or not the determination of step S105 has been continuously YES N1 times). If the determination of the step S121 is YES, the signal processing module 17 sets a flag A indicating that the bottom has been detected stably as a detection state of the bottom detection (S122), and performs a process of drawing the bottom acquired this time as a bottom image (S123). As a result, bottom images are displayed in the step S202, S203 of FIG. 12.

On the other hand, if the determination of the step S121 is NO, then at step S124, the signal processing module 17, sets a flag B indicating that the detection of the bottom is unstable, and determines at step S125, whether or not the detection state immediately before the unstable state (flag B) is stable state (flag A).. At step S123, the signal processing module 17 performs a process of drawing the bottom acquired this time as a bottom image when the determination of the step S125 is YES, and at step S126, the signal processing module 17 stops the drawing of the bottom when the determination of the step S125 is NO.

[0118]    Here, step S125 is a process of determining whether or not the present state is in a state in which the detected bottom has changed from a stable state to an unstable state. If the detection of the bottom changes from a stable state to an unstable state and is in a state shortly, it may be assumed that the detection of the bottom has been interrupted accidentally by some event. Therefore, when it is assumed that the determination of the step S125 is YES and the present state is in the process of such a state transition, the signal processing module 17 estimates that the bottom acquired this time is highly reliable to some extent, and performs a process of drawing the bottom acquired this time in the step S123.

On the other hand, when the determination of the step S125 is NO, the present state is not in the process of such state transitions. In this instance, the present state is in the process of transitioning from the state in which the flag C is set in the step S132 of FIG. 19 (the state in which the bottom is not detected continued) to the state of the flag B (the state in which the detection of the bottom is unstable). Therefore, it can be assumed that the bottom obtained this time is unreliable. Therefore, when the determination of the step S125 is NO, the signal processing module 17 stops the drawing of the bottom acquired this time in the step S123. In this instance, the bottom images are not displayed in the step S202, S203 of FIG. 12.

Referring to FIG. 19, if the determination of the step S105 of FIG. 16 was NO, then at step 131, the signal processing module 17 determines whether the bottom of each orientation was not continuously detected in the past N2 times of the transmission process (ping) including the present process (whether the determination of the step S105 was NO in N2 consecutive times).. If the determination of the step S131 is YES, then at step S132, the signal processing module 17 sets a flag C indicating that the bottom is not detected (stable in the state of the bottom non-detection) as the detection state of the bottom detection, and at step S133, performs a process of stopping the drawing of the bottom acquired this time. In this instance, the bottom images are not displayed in the step S202, S203 of FIG. 12.

On the other hand, if the determination of the step S131 is NO, then at step S134, the signal processing module 17, sets the flag B indicating that the bottom detection is unstable , and determines at step S135, whether or not the detection state immediately before unstable state (flag B) is stable state (flag A). At step S136, the signal processing module 17 performs continue drawing the bottom displayed in the previous transmission process (ping) as a bottom image when the determination of the step S135 is YES, , and at step S133, stops the drawing of the bottom when the determination of the step S135 is NO.

[0122]    According to the processes of FIG. 18 and FIG. 19, when the detection status of the bottom is unstable, it is possible to suppress erroneous display of the detection result of the bottom based on echoes other than the bottom (S125:NO, S126). In addition, even when the detection status of the bottom is unstable, if the detection result of the bottom is highly reliable, the bottom images based on the detection result can be displayed without interruption (S125:YES, S123). Further, even when the bottom is not detected, if the detection state of the bottom is not stable in the non-detection state and the reliability of the bottom displayed in the immediately preceding transmission process (ping) is high, the bottom images based on the bottom displayed in the immediately preceding transmission process (ping) can be displayed (S134 to S136). Therefore, according to the processing of FIG. 18 and FIG. 19, it is possible to more appropriately display the bottom image while suppressing the interruption of the display of the bottom image.

The edge position may be calculated by a method different from the calculation method shown in FIG. 6.

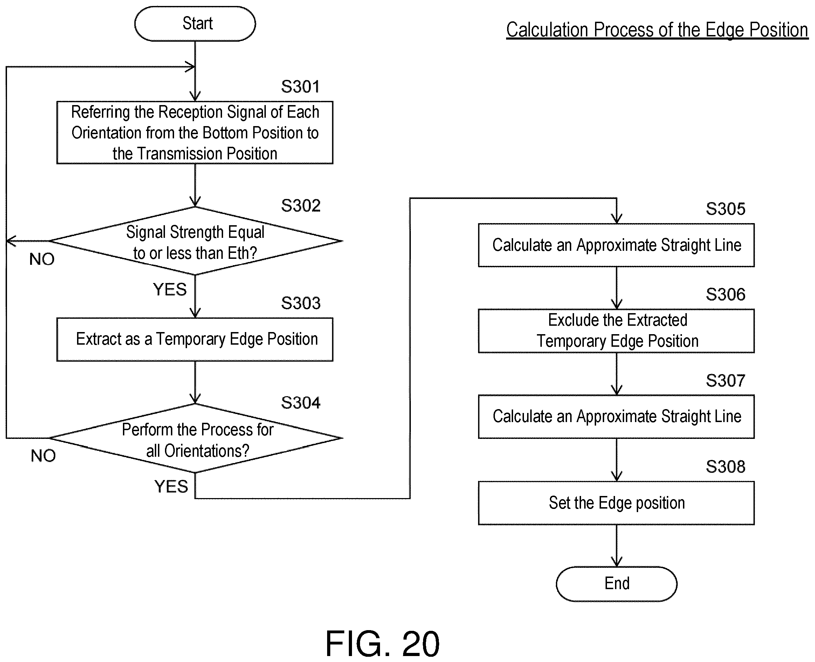

FIG. 20 is a flowchart showing a calculation process of the edge position according to the fourth modification.

At step S301, the signal processing module 17, refers to the reception signal of each orientation, and at step S302, detects the distance position at which the strength of the reception signal of each distance position is equal to or less than a predetermined threshold value Eth, toward the direction from the bottom position of each orientation detected in step S11 of FIG. 3 to the transmission position. Here, the threshold Eth is set near the lower limit of a range that can be assumed as the intensity of a signal based on an echo from the bottom.

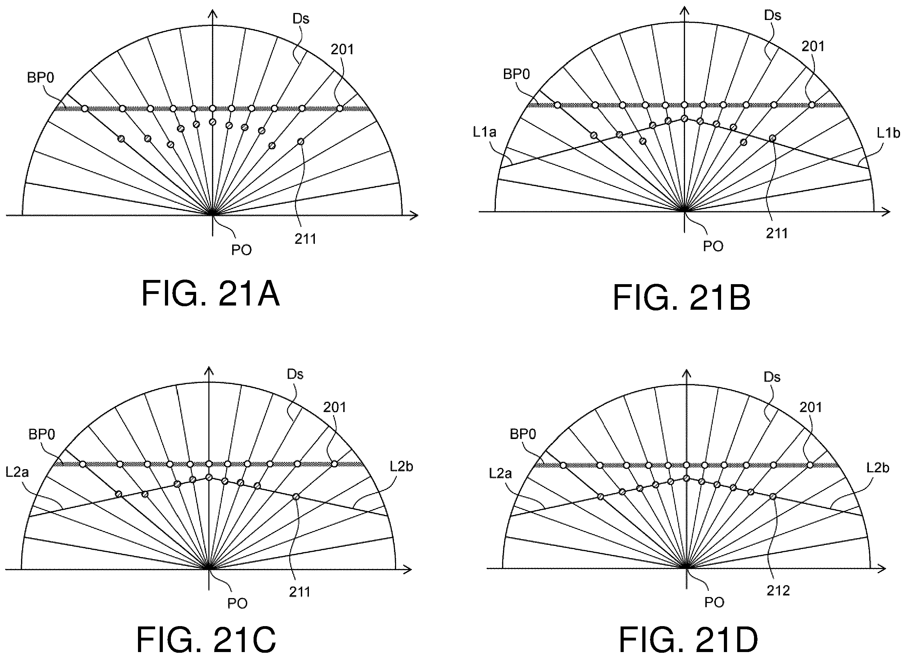

At step S302, it is determined when the signal strength at a predetermined distance position is equal to or less than the threshold value Eth. At step S303, the signal processing module 17 extracts the distance position as a temporary edge position in the orientation. At step S304, the signal processing module 17 performs the process of the step S301 to S303 for all orientations. Thus, for all orientations in which the bottom position is detected, the temporary edge position is extracted. For example, as in FIG. 21A, based on the bottom position 201 of each orientation, the temporary edge position 211 is extracted.

At step S305, the signal processing module 17 thus extracts the temporary edge positions of the respective orientations, and then calculates an approximate straight line of the temporary edge position group in the coordinate system of the orientation and the distance shown in FIG. 7. Here, the approximate straight line is calculated for the right range and the left range from the center orientation of the coordinate system. For example, when the temporary edge position 211 is extracted as shown in FIG. 21A, the approximate straight lines L1a and L1b are calculated as shown in FIG. 21B.

Then, in each orientation, at step S306, the signal processing module 17 extracts a temporary edge position closer to the transmission position than the approximate straight line for each direction, and excludes the extracted temporary edge position from the calculation target of the edge position, assuming that the extracted temporary edge position is an edge position based on echoes other than the bottom.

Thereafter, at step S307, the signal processing module 17 again calculates an approximate straight line for the temporary edge position group that is not excluded in the step S306. Again, the signal processing module 17 calculates an approximate straight line for the right range and the left range from the center orientation of the coordinate system shown in FIG. 7, respectively. For example, in the case of FIG. 21B, the approximate straight lines L2a and L2b are calculated as shown in FIG. 21C. Here, two of the temporary edge positions 211 shown in FIG. 21B are excluded, and the approximate straight lines L2a and L2b are calculated.

Then, at step S308, the signal processing module 17, in the coordinate system shown in FIG. 7, detects the distance position of the intersection of the approximate straight line calculated by the step S307 and each orientation, as the edge position of each orientation. For example, when the approximate straight lines L2a and L2b are calculated as shown in FIG. 21C, the edge position 212 is detected as shown in FIG. 21D.

According to the process of FIG. 20, since the edge position is detected based on the signal intensity of each orientation, as compared with the method of detecting the edge position by the geometric processing shown in FIG. 6, variation of the edge detection position from the normal position caused by the bottom sediment, water depth, tilt of the transmission beam and the bottom detection position, can be suppressed. Therefore, it is possible to more accurately detect the edge position corresponding to the shape of the bottom echo.

Note that in the process of FIG. 20, the same process as described with reference to FIG. 15A and FIG. 15B can be realized by changing the threshold Eth. That is, the higher the threshold value Eth, it is possible to bring the edge position of each orientation close to the bottom position, it is possible to easily display the fish school sticking to the vicinity of the bottom in the display image. In this modification, the threshold Eth may be controlled so that the threshold Eth increases from the initial value as the correction level of the area 401 included in the operation item 400 of FIG. 15A decreases. Thus, the user can confirm the fish school attached to the vicinity of the bottom by appropriately operating the area 401 by displaying the fish school on the display image.

Further, in the above embodiment, the bottom 311 is displayed in a different color from the detection image (fish school 312, fishing bank 313), but the display modes of the bottom 311 and the detection image may be different depending on a method other than the color. For example, different hatching may be applied to the detection image (fish school 312, fishing bank 313) and the bottom 311 to display them in a distinguishable manner.

Further, the layout of each screen is not limited to the layout shown in the above embodiment, and other layouts may be used as long as the detection image and the bottom image are appropriately displayed.

## EP 3 859 381 B1

The method of acquiring the volume data is not limited to the method of the above embodiment, and other methods may be used. For example, volume data may be acquired by scanning a flat and fan-shaped transmission beam in the tilt direction. Alternatively, an umbrella-shaped transmission beam may be transmitted over the entire circumference of the ship to obtain volume data.

In addition, the embodiments of the present invention can be appropriately modified in various manners within the scope described in the claims.

DESCRIPTION OF REFERENCE CHARACTERS

| | |
|---|---|
| 10 | underwater detection device |
| 17 | signal processing module |
| 18 | input module |
| 19 | display |
| 201, 203 | bottom position |
| 202, 204, 212 | edge position |
| 311 | bottom (bottom image) |
| 312 | fish school (detection image) |
| 313 | fishing bank (detection image) |
| ED1 | correction data |

**Claims**

1.  An underwater detection device (10), comprising:

    a bottom detection module (17a) configured to detect a bottom position based on echo data indicating a signal intensity of a reflected wave, wherein the reflected wave is a reflected wave of a transmission beam which is incident obliquely with respect to the bottom, and the bottom position is a position of the bottom at the center of a reception beam;
    an edge calculation module (17b) configured to calculate an edge position of a bottom echo with respect to the bottom position, wherein the edge position is at an edge of the reception beam;
    a correction module (17d) configured to calculate correction data in a range from a transmission position to the bottom position based on the echo data between the transmission position and the edge position, wherein the transmission position is a position from which the transmission beam is transmitted; and
    an image generation module (17e) configured to generate a detection image in a display mode corresponding to the signal intensity of the correction data, and a bottom image in a display mode different from the detection image based on the bottom position,
    wherein the correction module (17d) is configured to calculate the correction data by evenly extending the echo data existing between the transmission position and the edge position up to the bottom position, and interpolating the echo data to positions between the extended echo data where the echo data is not set.

2.  The underwater detection device (10) of claim 1, wherein:
    the image generation module (17e) displays the detection image in a color corresponding to the signal intensity, and displays the bottom image in a color different from the detection image.

3.  The underwater detection device (10) of claim 1 or 2, wherein:
    the edge calculation module (17b) calculates a correction value and calculates a distance from the transmission point to the edge position by subtracting the correction value from the distance from the transmission point to the bottom position.

4.  The underwater detection device (10) of claim 3, further comprising:

    an input module (18) configured to accept a coefficient;
    wherein:
    the edge calculation module (17b) calculates the edge position by multiplying the coefficient by the correction value.

5. The underwater detection device (10) of claim 1 or 2, wherein:
the edge calculation module (17b) detects a distance position where the signal intensity is equal to or less than a threshold value from the bottom position toward the transmission position, and sets the edge position based on the distance position.

6. The underwater detection device (10) of claim 5, further comprising:

   an input module (18) configured to accept the threshold value
   wherein:
   the edge calculation module (17b) detects a distance position based on the threshold value.

7. The underwater detection device (10) of any one of claims 1 to 6, wherein:
the image generation module (17e) generates the detection image and the bottom image viewed from a predetermined viewpoint based on the correction data and the bottom position in a three-dimensional detection range.

8. An underwater detection image generation method, comprising the steps of:

   detecting a bottom position (S11) based on echo data indicating a signal intensity of a reflected wave, wherein the reflected wave is a reflected wave of a transmission beam which is incident obliquely with respect to the bottom, and the bottom position is a position of the bottom at the center of a reception beam;
   calculating an edge position (S12) of a bottom echo with respect to the bottom position, wherein the edge position is at an edge of the reception beam;
   calculating correction data (S14) in a range from a transmission position to the bottom position based on the echo data between the transmission position and the edge position, wherein the transmission position is a position from which the transmission beam is transmitted; and
   generating a detection image (S15) in a display mode corresponding to the signal intensity of the correction data, and a bottom image in a display mode different from the detection image,
   wherein the step of calculating correction data (S14) comprises evenly extending the echo data existing between the transmission position and the edge position up to the bottom position, and interpolating the echo data to positions between the extended echo data where the echo data is not set.

**Patentansprüche**

1. Unterwasser-Erfassungsvorrichtung (10), die Folgendes umfasst:

   ein Bodenerfassungsmodul (17a), konfiguriert zum Erfassen einer Bodenposition auf der Basis von Echodaten, die eine Signalintensität einer reflektierten Welle anzeigen, wobei die reflektierte Welle eine reflektierte Welle eines Sendestrahls ist, der schräg in Bezug auf den Boden einfällt, und die Bodenposition eine Position des Bodens in der Mitte eines Empfangsstrahls ist;
   ein Randberechnungsmodul (17b), konfiguriert zum Berechnen einer Randposition eines Bodenechos in Bezug auf die Bodenposition, wobei sich die Randposition an einem Rand des Empfangsstrahls befindet;
   ein Korrekturmodul (17d), konfiguriert zum Berechnen von Korrekturdaten in einem Bereich von einer Sendeposition bis zur Bodenposition auf der Basis der Echodaten zwischen der Sendeposition und der Randposition, wobei die Sendeposition eine Position ist, von der aus der Sendestrahl gesendet wird; und
   ein Bilderzeugungsmodul (17e), konfiguriert zum Erzeugen eines Erfassungsbildes in einem Anzeigemodus, der der Signalintensität der Korrekturdaten entspricht, und eines Bodenbildes in einem Anzeigemodus, das sich vom Erfassungsbild auf der Basis der Bodenposition unterscheidet,
   wobei das Korrekturmodul (17d) zum Berechnen der Korrekturdaten durch gleichmäßiges Ausdehnen der zwischen der Sendeposition und der Randposition vorhandenen Echodaten bis zur Bodenposition und Interpolieren der Echodaten zu Positionen zwischen den ausgedehnten Echodaten konfiguriert ist, an denen die Echodaten nicht gesetzt sind.

2. Unterwasser-Erfassungsvorrichtung (10) nach Anspruch 1, wobei:
das Bilderzeugungsmodul (17e) das Erfassungsbild in einer Farbe anzeigt, die der Signalintensität entspricht, und das Bodenbild in einer Farbe anzeigt, die sich vom Erfassungsbild unterscheidet.

3. Unterwasser-Erfassungsvorrichtung (10) nach Anspruch 1 oder 2, wobei:

das Randberechnungsmodul (17b) einen Korrekturwert berechnet und einen Abstand vom Sendepunkt zur Randposition durch Subtrahieren des Korrekturwerts von dem Abstand vom Sendepunkt zur Bodenposition berechnet.

4. Unterwasser-Erfassungsvorrichtung (10) nach Anspruch 3, die ferner Folgendes umfasst:

ein Eingabemodul (18), das zum Akzeptieren eines Koeffizienten konfiguriert ist;
wobei:
das Randberechnungsmodul (17b) die Randposition durch Multiplizieren des Koeffizienten mit dem Korrekturwert berechnet.

5. Unterwasser-Erfassungsvorrichtung (10) nach Anspruch 1 oder 2, wobei:
das Randberechnungsmodul (17b) eine Abstandsposition erfasst, an der die Signalintensität gleich einem oder kleiner als ein Schwellenwert von der Bodenposition in Richtung der Sendeposition ist, und die Randposition auf der Basis der Abstandsposition festlegt.

6. Unterwasser-Erfassungsvorrichtung (10) nach Anspruch 5, die ferner Folgendes umfasst:

ein Eingabemodul (18), das zum Akzeptieren des Schwellenwerts konfiguriert ist;
wobei:
das Randberechnungsmodul (17b) eine Abstandsposition auf der Basis des Schwellenwerts erfasst.

7. Unterwasser-Erfassungsvorrichtung (10) nach einem der Ansprüche 1 bis 6, wobei:
das Bilderzeugungsmodul (17e) das Erfassungsbild und das Bodenbild von einem vorbestimmten Blickpunkt aus betrachtet auf der Basis der Korrekturdaten und der Bodenposition in einem dreidimensionalen Erfassungsbereich erzeugt.

8. Verfahren zum Erzeugen eines Unterwasser-Erfassungsbildes, das die folgenden Schritte beinhaltet:

Erfassen einer Bodenposition (S11) auf der Basis von Echodaten, die eine Signalintensität einer reflektierten Welle anzeigen, wobei die reflektierte Welle eine reflektierte Welle eines Sendestrahls ist, der schräg in Bezug auf den Boden einfällt, und die Bodenposition eine Position des Bodens in der Mitte eines Empfangsstrahls ist;
Berechnen einer Randposition (S12) eines Bodenechos in Bezug auf die Bodenposition, wobei die Randposition an einem Rand des Empfangsstrahls ist;
Berechnen von Korrekturdaten (S14) in einem Bereich von einer Sendeposition zur Bodenposition auf der Basis der Echodaten zwischen der Sendeposition und der Randposition, wobei die Sendeposition eine Position ist, von der aus der Sendestrahl gesendet wird; und
Erzeugen eines Erfassungsbildes (S15) in einem Anzeigemodus, der der Signalintensität der Korrekturdaten entspricht, und eines Bodenbildes in einem Anzeigemodus, das sich von dem Erfassungsbild unterscheidet, wobei der Schritt des Berechnens von Korrekturdaten (S14) das gleichmäßige Ausdehnen der zwischen der Sendeposition und der Randposition vorhandenen Echodaten bis zur Bodenposition und das Interpolieren der Echodaten zu Positionen zwischen den ausgedehnten Echodaten beinhaltet, an denen die Echodaten nicht gesetzt sind.

**Revendications**

1. Dispositif de détection sous-marine (10), comprenant :

un module de détection de fond (17a) configuré pour détecter une position de fond sur la base de données d'écho indiquant une intensité de signal d'une onde réfléchie, l'onde réfléchie étant une onde réfléchie d'un faisceau d'émission qui est incident en oblique par rapport au fond, et la position de fond étant une position du fond au centre d'un faisceau de réception ;
un module de calcul de front (17b) configuré pour calculer une position de front d'un écho de fond par rapport à la position de fond, la position de front étant au niveau d'un front du faisceau de réception ;
un module de correction (17d) configuré pour calculer des données de correction dans une plage allant d'une position d'émission à la position de fond sur la base des données d'écho entre la position d'émission et la position de front, la position d'émission étant une position d'où le faisceau d'émission est émis ; et
un module de génération d'images (17e) configuré pour générer une image de détection dans un mode d'affichage correspondant à l'intensité de signal des données de correction, et une image de fond dans un mode d'affichage différent de l'image de détection sur la base de la position de fond,

le module de correction (17d) étant configuré pour calculer les données de correction en étendant uniformément les données d'écho existant entre la position d'émission et la position de front jusqu'à la position de fond, et en interpolant les données d'écho à des positions entre les données d'écho étendues où les données d'écho ne sont pas définies.

2. Dispositif de détection sous-marine (10) selon la revendication 1, dans lequel :
le module de génération d'images (17e) affiche l'image de détection dans une couleur correspondant à l'intensité de signal et affiche l'image de fond dans une couleur différente de celle de l'image de détection.

3. Dispositif de détection sous-marine (10) selon la revendication 1 ou 2, dans lequel :
le module de calcul de front (17b) calcule une valeur de correction et calcule une distance entre le point d'émission et la position de front en soustrayant la valeur de correction de la distance entre le point d'émission et la position de fond.

4. Dispositif de détection sous-marine (10) selon la revendication 3, comprenant en outre :

un module d'entrée (18) configuré pour accepter un coefficient ;
le module de calcul de front (17b) calculant la position de front en multipliant le coefficient par la valeur de correction.

5. Dispositif de détection sous-marine (10) selon la revendication 1 ou 2, dans lequel :
le module de calcul de front (17b) détecte une position de distance où l'intensité de signal est inférieure ou égale à une valeur seuil de la position de fond vers la position d'émission, et définit la position de front sur la base de la position de distance.

6. Dispositif de détection sous-marine (10) selon la revendication 5, comprenant en outre :

un module d'entrée (18) configuré pour accepter la valeur seuil ;
le module de calcul de front (17b) détectant une position de distance sur la base de la valeur seuil.

7. Dispositif de détection sous-marine (10) selon l'une quelconque des revendications 1 à 6, dans lequel :
le module de génération d'images (17e) génère l'image de détection et l'image de fond vues d'un point de vue prédéterminé, sur la base des données de correction et de la position de fond dans une plage de détection tridimensionnelle.

8. Procédé de génération d'images de détection sous-marine, comprenant les étapes consistant à :

détecter une position de fond (S11) sur la base de données d'écho indiquant une intensité de signal d'une onde réfléchie, l'onde réfléchie étant une onde réfléchie d'un faisceau d'émission qui est incident en oblique par rapport au fond, et la position de fond étant une position du fond au centre d'un faisceau de réception ;
calculer une position de front (S12) d'un écho de fond par rapport à la position de fond, la position de front étant au niveau d'un front du faisceau de réception ;
calculer des données de correction (S14) dans une plage allant d'une position d'émission à la position de fond sur la base des données d'écho entre la position d'émission et la position de front, la position d'émission étant une position d'où le faisceau d'émission est émis ; et
générer une image de détection (S15) dans un mode d'affichage correspondant à l'intensité de signal des données de correction, et une image de fond dans un mode d'affichage différent de l'image de détection,
l'étape de calcul de données de correction (S14) comprenant les étapes consistant à étendre uniformément les données d'écho existant entre la position d'émission et la position de front jusqu'à la position de fond, et à interpoler les données d'écho à des positions entre les données d'écho étendues où les données d'écho ne sont pas définies.

FIG. 1

FIG. 2

EP 3 859 381 B1

```
              ┌──────────┐
              │  Start   │
              └────┬─────┘
                   │              S11
                   ▼
    ┌──────────────────────────────┐
    │   Detect the Bottom Position  │
    └───────────────┬──────────────┘
                    │             S12
                    ▼
    ┌──────────────────────────────┐
    │   Calculate the Edge Position │
    └───────────────┬──────────────┘
                    │             S13
                    ▼
    ┌──────────────────────────────┐
    │   Coordinate Transformation   │
    └───────────────┬──────────────┘
                    │             S14
                    ▼
    ┌──────────────────────────────┐
    │     Echo Data Correction      │
    └───────────────┬──────────────┘
                    │             S15
                    ▼
    ┌──────────────────────────────┐
    │      Image Generation         │
    └───────────────┬──────────────┘
                    │
                    ▼
              ┌──────────┐
              │   End    │
              └──────────┘
```

# FIG. 3

```
                    ┌─────────┐
                    │  Start  │
                    └────┬────┘
                         │ S101
         ┌───────────────▼───────────────┐
         │ Reception Signal Adjustment   │
         │ Process                       │
         │ (Smoothing, Noise Elimination)│
         └───────────────┬───────────────┘
                         │ S102
         ┌───────────────▼───────────────┐
         │ Differentiation of the        │
         │ Distance Direction            │
         └───────────────┬───────────────┘
                         │ S103
         ┌───────────────▼───────────────┐
         │ Extract the maximum Point     │
         └───────────────┬───────────────┘
                         │ S104
         ┌───────────────▼───────────────┐
         │ Preprocess                    │
         └───────────────────────────────┘
```

S105 — Satisfy the Condition?   NO / YES

S106 — Bottom Detection

S107 — Post-Detection Process

End

FIG. 4

FIG. 5

FIG. 6

EP 3 859 381 B1

FIG. 7

FIG. 8

FIG. 9

EP 3 859 381 B1

FIG. 10

EP 3 859 381 B1

FIG. 11A

FIG. 11B

FIG. 11C

FIG. 11D

Image Generation Process

```
        ┌───────────┐
        │   Start   │
        └─────┬─────┘
              │                              S201
    ┌─────────▼──────────────────────────┐
    │ Accumulate the Correction Data to   │
    │ Configure the Volume Data and       │
    │ Generate Detection Image            │
    └─────────┬──────────────────────────┘
              │                              S202
    ┌─────────▼──────────────────────────┐
    │ Accumulate the Bottom Position to   │
    │ Define the Bottom and Generate a    │
    │ Bottom Image by Giving a Color      │
    │ Different from the Color of the     │
    │ Detection Image                     │
    └─────────┬──────────────────────────┘
              │                              S203
    ┌─────────▼──────────────────────────┐
    │ Display the Detection Image and the │
    │ Bottom Image                        │
    └─────────┬──────────────────────────┘
              │
        ┌─────▼─────┐
        │    End    │
        └───────────┘
```

FIG. 12

FIG. 13A

FIG. 13B

FIG. 14

400

Bottom Echo Correction Level | 1 ▼ |

401                                              402

## FIG. 15A

310

314

312

313

311

## FIG. 15B

Start

S101

Reception Signal Adjustment Process
(Smoothing, Noise Elimination)

S102

Differentiation of the Distance Direction

S111

Set the extracting Range

S103

Extract the maximum Point

S104

Preprocess

S105

Satisfy the Condition?

NO

YES

S106

Bottom Detection

S112

Store the bottom Depth

S107

Post-Detection Process

End

FIG. 16

EP 3 859 381 B1

FIG. 17

S105 : YES

S106
Bottom Detection

S112
Store the bottom Depth

S107
Post-Detection Process

S121
Continuously
Detected N1 times?

NO

YES

S122
Detection State = A

S124
Detection State = B

S125
Immediately Before
Detection State = A?

YES

NO

S123
Drawing the Bottom Acquired this Time

S126
Stop the Drawing of the Bottom

End

FIG. 18

S105 : NO

S131

Continuously Not
Detected N2 times?

NO

YES

S132

Detection State = C

S134

Detection State = B

S135

NO

Immediately Before
Detection State = A?

YES

S133

Stop the Drawing of the Bottom

S136

Drawing the Previous Process Bottom

End

FIG. 19

Calculation Process of the Edge Position

```
              ( Start )
                  |
                  v
                              S301
  +-> Referring the Reception Signal of Each
  |   Orientation from the Bottom Position to
  |        the Transmission Position
  |               |
  |               v
  |                           S302
  |         < Signal Strength Equal >
  | NO        to or less than Eth?
  +-------<
  |               | YES
  |               v       S303
  |   Extract as a Temporary Edge Position
  |               |
  |               v
  |                           S304
  |         < Perform the Process for >
  | NO          all Orientations?
  +-------<
                  | YES
                  v
```

```
                              S305
    Calculate an Approximate Straight Line
                  |
                  v           S306
         Exclude the Extracted
         Temporary Edge Position
                  |
                  v           S307
    Calculate an Approximate Straight Line
                  |
                  v           S308
         Set the Edge position
                  |
                  v
              ( End )
```

# FIG. 20

FIG. 21A

FIG. 21B

FIG. 21C

FIG. 21D

**EP 3 859 381 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160259052 A1
- GB 2573759 A